# EUROPEAN PATENT SPECIFICATION

(11) **EP 2 958 372 B1**
(45) Date of publication and mention of the grant of the patent: **08.05.2019**
(21) Application number: 13875232.4
(22) Date of filing: 18.02.2013
(51) Int. Cl.: H04W 36/00, H04W 74/08

(54) **METHOD, DEVICE AND SYSTEM FOR HANDOVER OF USER EQUIPMENT GROUP**
VERFAHREN, VORRICHTUNG UND SYSTEM FÜR EINE WEITERREICHUNG IN EINER BENUTZERVORRICHTUNGSGRUPPE
PROCÉDÉ, DISPOSITIF ET SYSTÈME DE TRANSFERT INTERCELLULAIRE D'UN GROUPE D'ÉQUIPEMENTS UTILISATEUR

(43) Date of publication of application: 23.12.2015
(73) Proprietor: Huawei Technologies Co., Ltd., Longgang District Shenzhen, Guangdong 518129 (CN)
(72) Inventor: LU, Zhenwei, Shenzhen City Guangdong 518129 (CN); ZHU, Song, Shenzhen City Guangdong 518129 (CN); YANG, Fei, Shenzhen City Guangdong 518129 (CN); LI, Yue, Shenzhen City Guangdong 518129 (CN); GUO, Xiaolong, Shenzhen City Guangdong 518129 (CN)
(74) Representative: Gill Jennings & Every LLP
(86) International application number: PCT/CN2013/071641
(87) International publication number: WO 2014/124558

(56) References cited:
- WO-A1-2011/123755
- WO-A1-2012/162353
- CN-A- 101 754 291
- CN-A- 102 780 993
- CN-A- 102 932 859
- US-A1- 2011 134 887
- US-A1- 2011 134 887
- "Future Smartphone Solution White Paper", , 17 September 2012 (2012-09-17), XP055149404, Retrieved from the Internet: URL:http://www.google.nl/url?sa=t&rct=j&q= &esrc=s&source=web&cd=3&sqi=2&ved=0CDMQFjA C&url=http%3A%2F%2Fwww.huawei.com%2Filink% 2Fen%2Fdownload%2FHW_194460&ei=Xp1PVMjjB9D bauWVgbgE&usg=AFQjCNGutd5IQ8Fckt6rWNfJwqM0 x3JFFg&bvm=bv.77880786,d.d2s [retrieved on 2014-10-28]

## Description

### TECHNICAL FIELD

The present invention relates to the field of wireless network communications, and in particular, to a method, device, and system for handover of a user equipment group.

### BACKGROUND

MUCC (Multiple UEs Cooperative Communication, Multiple UEs Cooperative Communication) refers to that: when an eNB (evolved NodeB, evolved NodeB) communicates with UE (User Equipment, user equipment), the UE may directly communicate with the eNB or may communicate with agent UE (also referred to as S-UE, that is, supporting user equipment) near the UE, and after the agent UE forwards data to the UE, communication is performed between the two UEs. In this way, UE with an optimal channel condition may be selected as the agent UE to transmit uplink and downlink data, so as to achieve an effect of multiuser diversity. Single link MUCC refers to that: agent UE acts as an agent for one or more UEs to communicate with an eNB, and the agent UE and the UEs form a UE group, where the agent UE and the eNB are connected in a synchronized state, the UEs and the eNB are connected in an out-of-synchronization state, and uplink data can be sent only by using the agent UE. When locations of the agent UE and the UEs for which the agent UE acts as an agent change, it may be necessary to hand over a serving eNB for the UE group.

Currently, when the agent UE and the UEs for which the agent UE acts as an agent need to perform handover, each piece of UE (including the agent UE and the UEs) that is in the UE group and that is allowed to perform handover needs to be handed over from an S-eNB (Serving eNB, serving eNB) to a T-eNB (Target eNB, target eNB), and each piece of UE that is allowed to perform handover needs to initiate a random access process, to separately perform handover.

The prior art has the following disadvantages:

In a process of handover of a UE group in the prior art, agent UE and each piece of UE to be handed over all need to initiate a random access process, to separately perform handover, which leads to a need of consuming a large quantity of Preambles and signaling; and for UEs in a single link MUCC state, as long as the UEs do not break off a cooperative relationship with the agent UE, the UEs still need to return to the out-of-synchronization state after being switched to the synchronized state, therefore it is unnecessary to perform an additional synchronization process for handover.

WO2012/162353 and WO2011/123755 both disclose methods for controlling the handover of a user equipment group.

In order to resolve the problems in the prior art, embodiments of the present invention provide a method, device, and system for handover of a user equipment group. Technical solutions are as follows:

According to a first aspect, an embodiment of the present invention provides a method for handover of a user equipment group, where the method is performed by a serving base station and includes:
determining, according to a measurement report of the agent user equipment UE and a measurement report of UE in a UE group that are sent by the agent UE, whether the agent UE and each piece of UE in the UE group need to be handed over, where the UE group includes the agent UE and each piece of UE;
when the agent UE and at least one piece of UE in the UE group need to be handed over, sending a handover request message to a target base station T-eNB, where the handover request message includes at least context information of the agent UE and the at least one piece of to-be-handed-over UE that needs to be handed over and a cooperative relationship between the agent UE and the to-be-handed-over UE;
receiving a handover configuration message sent by the T-eNB and sending the handover configuration message to the agent UE, where the handover configuration message includes at least a physical random access channel PRACH resource and a cell radio network temporary identifier C-RNTI that are allocated by the T-eNB to the agent UE and a C-RNTI that is allocated by the T-eNB to each piece of to-be-handed-over UE that needs to be handed over; and
receiving a context release message sent by the T-eNB, and releasing context resources of the agent UE and the to-be-handed-over UE.

In a first possible implementation manner of the first aspect, the method further includes:
when the agent UE and the at least one piece of UE in the UE group need to be handed over, sending the handover request message to the T-eNB by using a mobility management entity MME, where the handover request message includes at least the context information of the agent UE and the at least one piece of to-be-handed-over UE that needs to be handed over and the cooperative relationship between the agent UE and the to-be-handed-over UE;
receiving, by using the MME, the handover configuration message sent by the T-eNB and sending the handover configuration message to the agent UE, where the handover configuration message includes at least the PRACH resource and the C-RNTI that are allocated by the T-eNB to the agent UE and the C-RNTI that is allocated by the T-eNB to each piece of to-be-handed-over UE that needs to be handed over; and
receiving, by using the MME, the context release message sent by the T-eNB, and releasing the context resources of the agent UE and the to-be-handed-over UE.

According to a second aspect, an embodiment of the present invention provides a method for handover of a user equipment group, where the method is performed by an agent user equipment UE and includes:
sending a measurement report of agent UE and a measurement report of UE in a user equipment UE group to a serving base station S-eNB, where the UE group includes the agent UE and each piece of UE;
receiving a handover configuration message sent by the S-eNB, where the handover configuration message includes at least a physical random access channel PRACH resource and a cell radio network temporary identifier C-RNTI that are allocated by the T-eNB to the agent UE and a C-RNTI that is allocated by the T-eNB to each piece of to-be-handed-over UE that needs to be handed over;
sending a handover configuration message separately to each piece of to-be-handed-over UE, where the handover configuration message includes at least the C-RNTI that is allocated by the T-eNB to the to-be-handed-over UE; and
initiating random access to the T-eNB according to the PRACH resource, and establishing an uplink synchronous connection to the T-eNB.

In a first possible implementation manner of the second aspect, after the establishing an uplink synchronous connection to the T-eNB, the method further includes:
sending a first handover complete message to the T-eNB;
sending a second handover complete message separately to each piece of to-be-handed-over UE in the UE group; and
receiving a third handover complete message sent by each piece of to-be-handed-over UE in the UE group and forwarding the third handover complete message to the T-eNB.

In a second possible implementation manner of the second aspect, after the initiating random access to the T-eNB according to the PRACH resource, the method further includes:
if the initiating random access to the T-eNB according to the PRACH resource fails, initiating a synchronous-connection re-establishment request; and
if synchronous-connection re-establishment fails, sending a re-establishment notification message to each piece of to-be-handed-over UE in the UE group, to instruct each piece of to-be-handed-over UE in the UE group to separately establish a synchronous connection.

According to a third aspect, an embodiment of the present invention provides a method for handover of a user equipment group, where the method includes:
sending a measurement report to agent user equipment UE, so that the agent UE forwards the measurement report and a measurement report of the agent UE to a serving base station S-eNB;
receiving a handover configuration message sent by the agent UE, where the handover configuration message includes at least a cell radio network temporary identifier C-RNTI that is allocated by a target base station T-eNB; and
completing handover of to-be-handed-over UE according to the C-RNTI, and sending a third handover complete message to the agent UE, so that the agent UE forwards the handover complete message to the target base station T-eNB.

According to a fourth aspect, an embodiment of the present invention provides a method for handover of a user equipment group, where the method is performed by a target base station and includes:
receiving a handover request message sent by a serving base station S-eNB, where the handover request message includes at least context information of agent user equipment UE and at least one piece of to-be-handed-over UE that is in a UE group and that needs to be handed over and a cooperative relationship between the agent UE and the to-be-handed-over UE;
allocating resources to the agent UE and each piece of to-be-handed-over UE that is in the UE group and that needs to be handed over, where the resources include at least a physical random access channel PRACH resource and a cell radio network temporary identifier C-RNTI that are allocated to the agent UE and a C-RNTI that is allocated to each piece of to-be-handed-over UE that needs to be handed over;
sending a handover configuration message to the S-eNB, where the handover configuration message includes at least the PRACH resource and the C-RNTI that are allocated to the agent UE and the C-RNTI that is allocated to each piece of to-be-handed-over UE that needs to be handed over;
receiving an access request that is sent by the agent UE according to the PRACH resource, and establishing an uplink synchronous connection to the agent UE; and
receiving a handover complete message that indicates that the to-be-handed-over UE has completed handover according to the C-RNTI and that is forwarded by the agent UE, to learn that the to-be-handed-over UE has completed the handover.

In a first possible implementation manner of the fourth aspect, after the receiving a handover complete message that indicates that the to-be-handed-over UE has completed handover according to the C-RNTI and that is forwarded by the agent UE, the method further includes:
sending a path conversion request to a mobility management entity MME;
receiving a path conversion confirm message that is sent by the MME after the MME converts downlink paths of the agent UE and the to-be-handed-over UE according to the path conversion request; and
sending a context release message to the MME, so that the MME sends a context release command to the S-eNB, to cause the S-eNB to release context resources of the agent UE and the to-be-handed-over UE.

According to a fifth aspect, an embodiment of the present invention provides a serving base station device for handover of a user equipment group, where the device includes:
a handover determining module, configured to determine, according to a measurement report of the agent user equipment UE and a measurement report of UE in a UE group that are sent by the agent user equipment UE, whether the agent UE and each piece of UE in the UE group need to be handed over, where the UE group includes the agent UE and each piece of UE;
a handover requesting module, configured to: when the agent UE and at least one piece of UE in the UE group need to be handed over, send a handover request message to a target base station T-eNB, where the handover request message includes at least context information of the agent UE and the at least one piece of to-be-handed-over UE that needs to be handed over and a cooperative relationship between the agent UE and the to-be-handed-over UE;
a handover confirming module, configured to receive a handover configuration message sent by the T-eNB and send the handover configuration message to the agent UE, where the handover configuration message includes at least a physical random access channel PRACH resource and a cell radio network temporary identifier C-RNTI that are allocated by the T-eNB to the agent UE and a C-RNTI that is allocated by the T-eNB to each piece of to-be-handed-over UE that needs to be handed over; and
a first releasing module, configured to receive a context release message sent by the T-eNB, and release context resources of the agent UE and the to-be-handed-over UE.

In a first possible implementation manner of the fifth aspect, the device further includes:
a first forwarding module, configured to: when the agent UE and the at least one piece of UE in the UE group need to be handed over, send the handover request message to the T-eNB by using a mobility management entity MME, where the handover request message includes at least the context information of the agent UE and the at least one piece of to-be-handed-over UE that needs to be handed over and the cooperative relationship between the agent UE and the to-be-handed-over UE;
a second forwarding module, configured to receive, by using the MME, the handover configuration message sent by the T-eNB and send the handover configuration message to the agent UE, where the handover configuration message includes at least the PRACH resource and the C-RNTI that are allocated by the T-eNB to the agent UE and the C-RNTI that is allocated by the T-eNB to each piece of to-be-handed-over UE that needs to be handed over; and
a third forwarding module, configured to receive, by using the MME, the context release message sent by the T-eNB, and release the context resources of the agent UE and the to-be-handed-over UE.

According to a sixth aspect, an embodiment of the present invention provides an agent user equipment device for handover of a user equipment group, where the device includes:
a first sending module, configured to send a measurement report of agent UE and a measurement report of each piece of UE in a user equipment UE group to a serving base station S-eNB, where the UE group includes the agent UE and each piece of UE;
a confirmation receiving module, configured to receive a handover configuration message sent by the S-eNB, where the handover configuration message includes at least a physical random access channel PRACH resource and a cell radio network temporary identifier C-RNTI that are allocated by the T-eNB to the agent UE and a C-RNTI that is allocated by the T-eNB to each piece of to-be-handed-over UE that needs to be handed over;
an identifier sending module, configured to send a handover configuration message separately to each piece of to-be-handed-over UE, where the handover configuration message includes at least the C-RNTI that is allocated by the T-eNB to the to-be-handed-over UE; and
a first access module, configured to initiate random access to the T-eNB according to the PRACH resource, and establish an uplink synchronous connection to the T-eNB.

In a first possible implementation manner of the sixth aspect, the device further includes:
a first handover completing module, configured to: after the uplink synchronous connection to the T-eNB is established, send a first handover complete message to the T-eNB; and send a second handover complete message separately to each piece of to-be-handed-over UE in the UE group; and
a second handover completing module, configured to receive a third handover complete message sent by each piece of to-be-handed-over UE in the UE group and forward the third handover complete message to the T-eNB.

In a second possible implementation manner of the sixth aspect, the device further includes:
a second access module, configured to: after the random access to the T-eNB is initiated according to the PRACH resource, if the random access to the T-eNB initiated according to the PRACH resource fails, initiate a synchronous-connection re-establishment request; and if synchronous-connection re-establishment fails, send a re-establishment notification message to each piece of to-be-handed-over UE in the UE group, to instruct each piece of to-be-handed-over UE in the UE group to separately establish a synchronous connection.

According to a seventh aspect, an embodiment of the present invention provides a to-be-handed-over user equipment device for handover of a user equipment group, where the device includes:
a second sending module, configured to send a measurement report to agent user equipment UE, so that the agent UE forwards the measurement report and a measurement report of the agent UE to a serving base station S-eNB;
an identifier receiving module, configured to receive a handover configuration message sent by the agent UE, where the handover configuration message includes at least a cell radio network temporary identifier C-RNTI that is allocated by a target base station T-eNB; and
a third handover completing module, configured to complete handover of to-be-handed-over UE according to the C-RNTI, and send a third handover complete message to the agent UE, so that the agent UE forwards the handover complete message to the target base station T-eNB.

According to an eighth aspect, an embodiment of the present invention provides a target base station device for handover of a user equipment group, where the device includes:
a handover receiving module, configured to receive a handover request message sent by a serving base station S-eNB, where the handover request message includes at least context information of agent user equipment UE and at least one piece of to-be-handed-over UE that needs to be handed over and a cooperative relationship between the agent UE and the to-be-handed-over UE;
an identifier allocating module, configured to allocate resources to the agent UE and each piece of to-be-handed-over UE that is in the UE group and that needs to be handed over, where the resources include at least a physical random access channel PRACH resource and a cell radio network temporary identifier C-RNTI that are allocated to the agent UE and a C-RNTI that is allocated to each piece of to-be-handed-over UE that needs to be handed over; and send a handover configuration message to the S-eNB, where the handover configuration message includes at least the PRACH resource and the C-RNTI that are allocated to the agent UE and the C-RNTI that is allocated to each piece of to-be-handed-over UE that needs to be handed over;
a third access module, configured to receive an access request that is sent by the agent UE according to the PRACH resource, and establish an uplink synchronous connection to the agent UE; and
a fourth handover completing module, configured to receive a handover complete message that indicates that the to-be-handed-over UE has completed handover according to the C-RNTI and that is forwarded by the agent UE, to learn that the to-be-handed-over UE has completed the handover.

In a first possible implementation manner of the eighth aspect, the device further includes:
a path conversion requesting module, configured to: after the handover complete message that indicates that the to-be-handed-over UE has completed the handover according to the C-RNTI and that is forwarded by the agent UE is received, send a path conversion request to a mobility management entity MME;
a path conversion confirming module, configured to receive a path conversion confirm message that is sent by the MME after the MME converts downlink paths of the agent UE and the to-be-handed-over UE according to the path conversion request; and
a second releasing module, configured to send a context release message to the MME, so that the MME sends a context release command to the S-eNB, to cause the S-eNB to release context resources of the agent UE and the to-be-handed-over UE.

According to a ninth aspect, an embodiment of the present invention provides a system for handover of a user equipment group, where the system includes:
a serving base station S-eNB, agent user equipment UE, to-be-handed-over UE in an agent group, and a target base station T-eNB, where
the S-eNB is configured to implement the function according to the first aspect;
the agent UE is configured to implement the function according to the second aspect;
the to-be-handed-over UE in the agent group is configured to implement the function according to the third aspect; and
the target base station T-eNB is configured to implement the function according to the fourth aspect.

Beneficial effects of the technical solutions provided by the embodiments of the present invention are as follows:
When it is determined that agent UE and at least one piece of UE in a UE group need to be handed over, a handover request message is sent to a T-eNB; a handover configuration message sent by the T-eNB is received and is sent to the agent UE, where the handover configuration message includes at least a PRACH resource and a C-RNTI that are allocated by the T-eNB to the agent UE and a C-RNTI that is allocated by the T-eNB to each piece of to-be-handed-over UE that needs to be handed over; and a context release message sent by the T-eNB is received, and context resources of the agent UE and the to-be-handed-over UE are released, thereby resolving a problem that currently a large quantity of Preambles and signaling need to be consumed because agent UE and each piece of to-be-handed-over UE need to perform handover separately with a T-eNB during handover of a user equipment group and a problem of redundant synchronization in a single link MUCC state, saving Preamble resources and signaling, and improving handover efficiency.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for handover of a user equipment group according to Embodiment 1 of the present invention;
FIG. 2 is a flowchart of a method for handover of a user equipment group according to Embodiment 2 of the present invention;
FIG. 3 is a flowchart of a method for handover of a user equipment group according to Embodiment 3 of the present invention;
FIG. 4 is a flowchart of a method for handover of a user equipment group according to Embodiment 4 of the present invention;
FIG. 5 is a flowchart of a method for handover of a user equipment group according to Embodiment 5 of the present invention;
FIG. 6 is a schematic operational diagram of the method for handover of a user equipment group according to Embodiment 5 of the present invention;
FIG. 7 is a flowchart of a method for handover of a user equipment group according to Embodiment 6 of the present invention;
FIG. 8 is a schematic operational diagram of the method for handover of a user equipment group according to Embodiment 6 of the present invention;
FIG. 9 is a first schematic structural diagram of a device for handover of a user equipment group according to Embodiment 7 of the present invention;
FIG. 10 is a second schematic structural diagram of the device for handover of a user equipment group according to Embodiment 7 of the present invention;
FIG. 11 is a first schematic structural diagram of a device for handover of a user equipment group according to Embodiment 8 of the present invention;
FIG. 12 is a second schematic structural diagram of the device for handover of a user equipment group according to Embodiment 8 of the present invention;
FIG. 13 is a third schematic structural diagram of the device for handover of a user equipment group according to Embodiment 8 of the present invention;
FIG. 14 is a first schematic structural diagram of a device for handover of a user equipment group according to Embodiment 9 of the present invention;
FIG. 15 is a first schematic structural diagram of a device for handover of a user equipment group according to Embodiment 10 of the present invention;
FIG. 16 is a second schematic structural diagram of a device for handover of a user equipment group according to Embodiment 10 of the present invention; and
FIG. 17 is a schematic structural diagram of a system for handover of a user equipment group according to Embodiment 11 of the present invention.

### DESCRIPTION OF EMBODIMENTS

To make the objectives, technical solutions, and advantages of the present invention clearer, the following further describes the embodiments of the present invention in detail with reference to the accompanying drawings.

### Embodiment 1

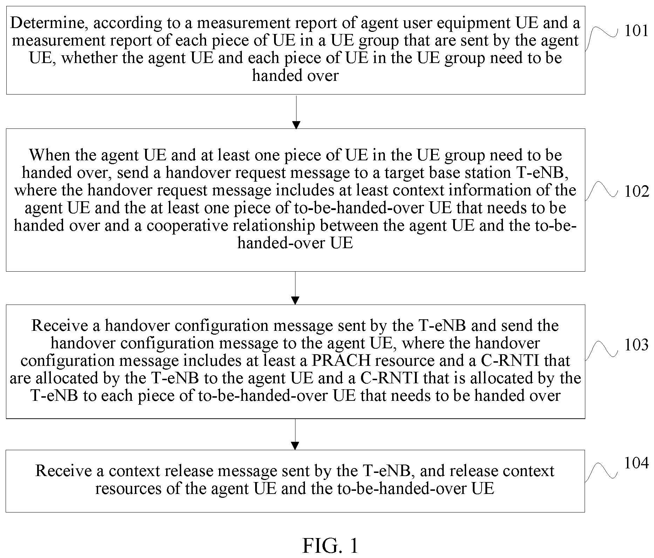

Referring to FIG. 1, an embodiment of the present invention provides a method for handover of a user equipment group, where the method includes:

101: Determine, according to a measurement report of agent user equipment UE and a measurement report of UE in a UE group that are sent by the agent UE, whether the agent UE and each piece of UE in the UE group need to be handed over, where the UE group includes the agent UE and each piece of UE.

102: When the agent UE and at least one piece of UE in the UE group need to be handed over, send a handover request message to a target base station T-eNB, where the handover request message includes at least context information of the agent UE and the at least one piece of to-be-handed-over UE that needs to be handed over and a cooperative relationship between the agent UE and the to-be-handed-over UE.

103: Receive a handover configuration message sent by the T-eNB and send the handover configuration message to the agent UE, where the handover configuration message includes at least a PRACH (Physical Random Access Channel, physical random access channel) resource and a C-RNTI (Cell Radio Network Temporary Identifier, cell radio network temporary identifier) that are allocated by the T-eNB to the agent UE and a C-RNTI that is allocated by the T-eNB to each piece of to-be-handed-over UE that needs to be handed over.

104: Receive a context release message sent by the T-eNB, and release context resources of the agent UE and the to-be-handed-over UE.

Specifically, the method further includes:
when the agent UE and the at least one piece of UE in the UE group need to be handed over, sending the handover request message to the T-eNB by using a mobility management entity MME, where the handover request message includes at least the context information of the agent UE and the at least one piece of to-be-handed-over UE that needs to be handed over and the cooperative relationship between the agent UE and the to-be-handed-over UE;
receiving, by using the MME, the handover configuration message sent by the T-eNB and sending the handover configuration message to the agent UE, where the handover configuration message includes at least the PRACH resource and the C-RNTI that are allocated by the T-eNB to the agent UE and the C-RNTI that is allocated by the T-eNB to each piece of to-be-handed-over UE that needs to be handed over; and
receiving, by using the MME, the context release message sent by the T-eNB, and releasing the context resources of the agent UE and the to-be-handed-over UE.

In the method provided by this embodiment of the present invention, when it is determined that agent UE and at least one piece of UE in a UE group need to be handed over, a handover request message is sent to a T-eNB; a handover configuration message sent by the T-eNB is received and is sent to the agent UE, where the handover configuration message includes at least a PRACH resource and a C-RNTI that are allocated by the T-eNB to the agent UE and a C-RNTI that is allocated by the T-eNB to each piece of to-be-handed-over UE that needs to be handed over; and a context release message sent by the T-eNB is received, and context resources of the agent UE and the to-be-handed-over UE are released, thereby resolving a problem that currently a large quantity of Preambles and signaling need to be consumed because agent UE and each piece of to-be-handed-over UE need to perform handover separately with a T-eNB during handover of a user equipment group and a problem of redundant synchronization in a single link MUCC state, saving Preamble resources and signaling, and improving handover efficiency.

### Embodiment 2

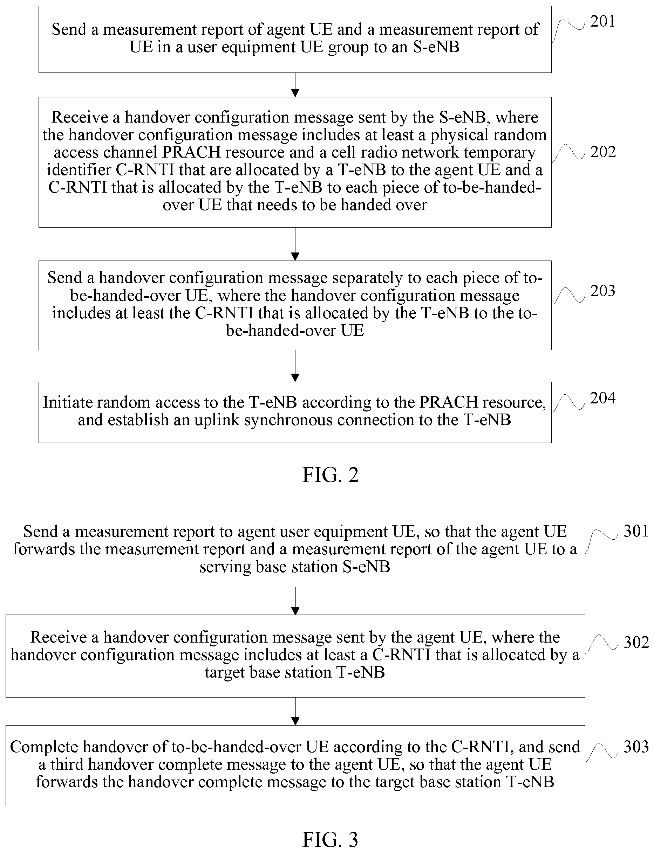

Referring to FIG. 2, an embodiment of the present invention provides a method for handover of a user equipment group, where the method includes:
201: Send a measurement report of agent UE and a measurement report of UE in a user equipment UE group to an S-eNB (Serving eNB, serving base station), where the UE group includes the agent UE and each piece of UE.
202: Receive a handover configuration message sent by the S-eNB, where the handover configuration message includes at least a physical random access channel PRACH resource and a cell radio network temporary identifier C-RNTI that are allocated by a T-eNB to the agent UE and a C-RNTI that is allocated by the T-eNB to each piece of to-be-handed-over UE that needs to be handed over.
203: Send a handover configuration message separately to each piece of to-be-handed-over UE, where the handover configuration message includes at least the C-RNTI that is allocated by the T-eNB to the to-be-handed-over UE.
204: Initiate random access to the T-eNB according to the PRACH resource, and establish an uplink synchronous connection to the T-eNB.

Specifically, after the uplink synchronous connection to the T-eNB is established, the method further includes:
sending a first handover complete message to the T-eNB;
sending a second handover complete message separately to each piece of to-be-handed-over UE in the UE group; and
receiving a third handover complete message sent by each piece of to-be-handed-over UE in the UE group and forwarding the third handover complete message to the T-eNB.

Specifically, after the initiating random access to the T-eNB according to the PRACH resource, the method further includes:
if the initiating random access to the T-eNB according to the PRACH resource fails, initiating a synchronous-connection re-establishment request; and
if synchronous-connection re-establishment fails, sending a re-establishment notification message to each piece of to-be-handed-over UE in the UE group, to instruct each piece of to-be-handed-over UE in the UE group to separately establish a synchronous connection.

In the method provided by this embodiment of the present invention, a measurement report of agent UE and a measurement report of UE in a UE group are sent to an S-eNB; a handover configuration message sent by the S-eNB is received; a handover configuration message is sent separately to each piece of to-be-handed-over UE; and random access to a T-eNB is initiated according to a PRACH resource, and an uplink synchronous connection to the T-eNB is established, thereby resolving a problem that currently a large quantity of Preambles and signaling need to be consumed because agent UE and each piece of to-be-handed-over UE need to perform handover separately with a T-eNB during handover of a user equipment group and a problem of redundant synchronization in a single link MUCC state, saving Preamble resources and signaling, and improving handover efficiency.

### Embodiment 3

Referring to FIG. 3, an embodiment of the present invention provides a method for handover of a user equipment group, where the method includes:
301: Send a measurement report to agent user equipment UE, so that the agent UE forwards the measurement report and a measurement report of the agent UE to a serving base station S-eNB.
302: Receive a handover configuration message sent by the agent UE, where the handover configuration message includes at least a cell radio network temporary identifier C-RNTI that is allocated by a target base station T-eNB.
303: Complete handover of to-be-handed-over UE according to the C-RNTI, and send a third handover complete message to the agent UE, so that the agent UE forwards the handover complete message to the target base station T-eNB.

In the method provided by this embodiment of the present invention, a measurement report is sent to agent UE; a handover configuration message sent by the agent UE is received; and handover of to-be-handed-over UE is completed according to a C-RNTI, and a third handover complete message is sent to the agent UE, so that the agent UE notifies a T-eNB of the handover complete message, thereby resolving a problem that currently a large quantity of Preambles and signaling need to be consumed because agent UE and each piece of to-be-handed-over UE need to perform handover separately with a T-eNB during handover of a user equipment group and a problem of redundant synchronization in a single link MUCC state, saving Preamble resources and signaling, and improving handover efficiency.

### Embodiment 4

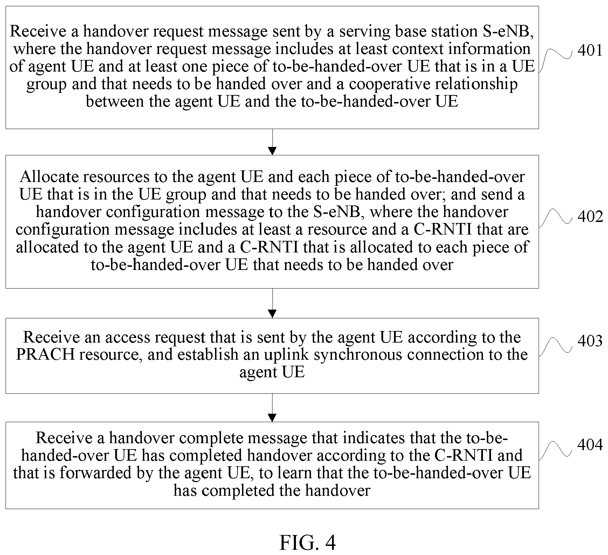

Referring to FIG. 4, an embodiment of the present invention provides a method for handover of a user equipment group, where the method includes:
401: Receive a handover request message sent by a serving base station S-eNB, where the handover request message includes at least context information of agent UE and at least one piece of to-be-handed-over UE that is in a UE group and that needs to be handed over and a cooperative relationship between the agent UE and the to-be-handed-over UE.
402: Allocate resources to the agent UE and each piece of to-be-handed-over UE that is in the UE group and that needs to be handed over, where the resources include at least a physical random access channel PRACH resource and a cell radio network temporary identifier C-RNTI that are allocated to the agent UE and a C-RNTI that is allocated to each piece of to-be-handed-over UE that needs to be handed over; and send a handover configuration message to the S-eNB, where the handover configuration message includes at least the PRACH resource and the C-RNTI that are allocated to the agent UE and the C-RNTI that is allocated to each piece of to-be-handed-over UE that needs to be handed over.
403: Receive an access request that is sent by the agent UE according to the PRACH resource, and establish an uplink synchronous connection to the agent UE.
404: Receive a handover complete message that indicates that the to-be-handed-over UE has completed handover according to the C-RNTI and that is forwarded by the agent UE, to learn that the to-be-handed-over UE has completed the handover.

Specifically, after the receiving a handover complete message that indicates that the to-be-handed-over UE has completed handover according to the C-RNTI and that is forwarded by the agent UE, the method further includes:
sending a path conversion request to a mobility management entity MME;
receiving a path conversion confirm message that is sent by the MME after the MME converts downlink paths of the agent UE and the to-be-handed-over UE according to the path conversion request; and
sending a context release message to the MME, so that the MME sends a context release command to the S-eNB, to cause the S-eNB to release context resources of the agent UE and the to-be-handed-over UE.

In the method provided by this embodiment of the present invention, a handover request message sent by an S-eNB is received, resources are allocated to agent UE and each piece of to-be-handed-over UE that is in a UE group and that needs to be handed over; a handover configuration message is sent to the S-eNB; an access request that is sent by the agent UE according to a PRACH resource is received, and an uplink synchronous connection to the agent UE is established; and a handover complete message that indicates that the to-be-handed-over UE has completed handover according to a C-RNTI and that is forwarded by the agent UE is received, to learn that the to-be-handed-over UE has completed the handover, thereby resolving a problem that currently a large quantity of Preambles and signaling need to be consumed because agent UE and each piece of to-be-handed-over UE need to perform handover separately with a T-eNB during handover of a user equipment group and a problem of redundant synchronization in a single link MUCC state, saving Preamble resources and signaling, and improving handover efficiency.

### Embodiment 5

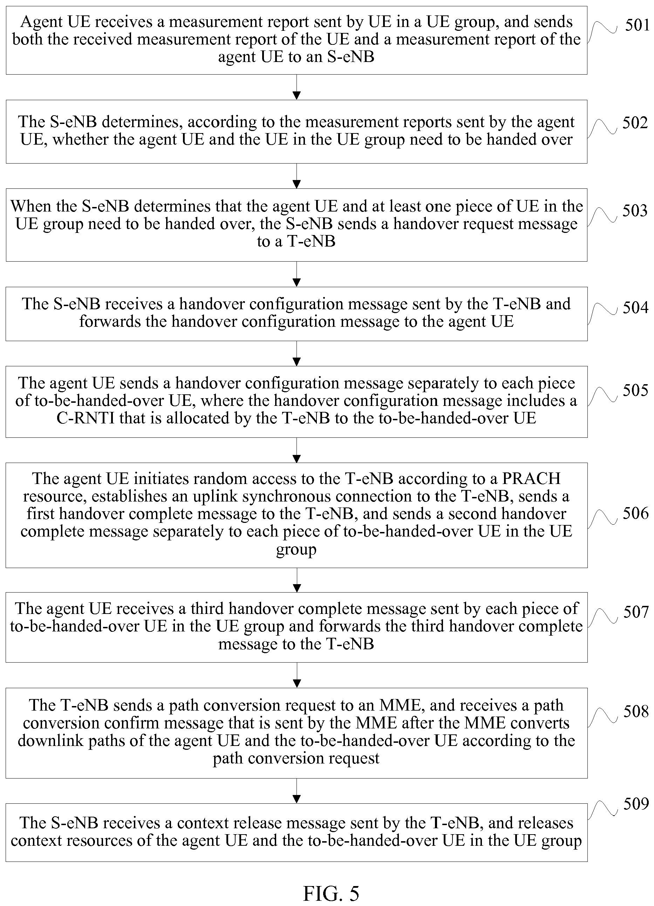

Referring to FIG. 5, an embodiment of the present invention provides a method for handover of a user equipment group, where the method includes:
501: Agent UE receives a measurement report sent by UE in a UE group, and sends both the received measurement report of the UE and a measurement report of the agent UE to an S-eNB.

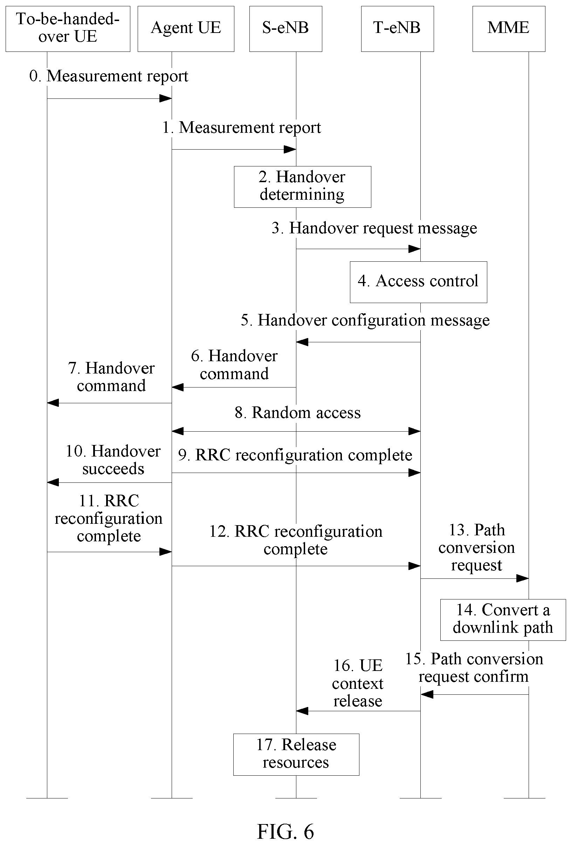

Specifically, in a UE group, an intermediate UE that plays a forwarding role is referred to as the agent UE, and is also referred to as S-UE (Supporting UE, supporting UE), and UE whose measurement report is forwarded is referred to as a B-UE (Benefitted UE, benefitted UE). One piece of agent UE may support multiple UEs; and the agent UE and each piece of UE supported by the agent UE form the UE group. Referring to FIG. 6, in step 0, UE sends a measurement report to agent UE; and in step 1, the agent UE sends both the measurement report of each piece of UE and a measurement report of the agent UE to an S-eNB.

502: The S-eNB determines, according to the measurement reports sent by the agent UE, whether the agent UE and the UE in the UE group need to be handed over.

The measurement reports include the measurement report of the agent UE and the measurement report of each piece of to-be-handed-over UE in the UE group. After receiving the measurement reports sent by the agent UE, the S-eNB determines, according to a preset rule, whether the agent UE and the to-be-handed-over UE in the UE group need to be handed over, for example, determines a communication status of the UE according to a channel communication quality parameter, so as to determine whether handover is needed. Referring to FIG. 6, in step 2, the S-eNB performs handover determining.

503: When the S-eNB determines that the agent UE and at least one piece of UE in the UE group need to be handed over, the S-eNB sends a handover request message to a T-eNB.

Specifically, the handover request message includes at least context information of the agent UE and the at least one piece of to-be-handed-over UE that needs to be handed over and a cooperative relationship between the agent UE and the to-be-handed-over UE. The S-eNB determines, according to the measurement reports sent by the agent UE, whether the agent UE and the UE in the UE group need to be handed over, and if the agent UE and the at least one piece of UE in the UE group need to be handed over, the S-eNB sends a handover request message to the T-eNB. The other UEs that do not need to be handed over re-establish a synchronous connection. If the S-eNB determines that neither the agent UE nor the UE in the UE group needs to be handed over, the S-eNB does not send a handover request message to the T-eNB. Referring to FIG. 6, in step 3, the S-eNB sends a handover request message to a T-eNB.

504: The S-eNB receives a handover configuration message sent by the T-eNB and forwards the handover configuration message to the agent UE.

Specifically, the handover configuration message includes at least a PRACH resource and a C-RNTI that are allocated by the T-eNB to the agent UE and a C-RNTI that is allocated by the T-eNB to each piece of to-be-handed-over UE that needs to be handed over, where the PRACH resource includes a Preamble. Referring to FIG. 6, in step 4, the T-eNB performs access control, and allocates a PRACH resource to the agent UE and allocates a C-RNTI to the agent UE and each piece of to-be-handed-over UE that is allowed to perform accessing; in step 5, the T-eNB sends a handover configuration message to the S-eNB; and in step 6, after receiving the handover configuration message, the S-eNB sends a handover command (RRC connection reconfiguration message) to the agent UE, where the handover command includes the PRACH resource and the C-RNTI that are allocated to the agent UE and the C-RNTI that is allocated to each piece of to-be-handed-over UE that needs to be handed over.

505: The agent UE sends a handover configuration message separately to each piece of to-be-handed-over UE, where the handover configuration message includes a C-RNTI that is allocated by the T-eNB to the to-be-handed-over UE.

Specifically, after receiving the handover configuration message, the agent UE takes out the PRACH resource and the C-RNTI of the agent UE, and then sends the handover configuration message separately to each piece of to-be-handed-over UE, where the handover configuration message includes at least the C-RNTI that is allocated by the T-eNB to the to-be-handed-over UE. Referring to FIG. 6, in step 7, the agent UE separately sends a handover command (RRC connection reconfiguration message) to each piece of to-be-handed-over UE that is allowed to perform handover, where the RRC connection reconfiguration message includes the C-RNTI that is allocated by the T-eNB to the to-be-handed-over UE in the UE group and other related information.

It should be noted that, for each piece of to-be-handed-over UE, when the S-eNB determines that the to-be-handed-over UE needs to be handed over, if the to-be-handed-over UE does not receive the handover configuration message including the C-RNTI that is allocated by the T-eNB to the to-be-handed-over UE, the to-be-handed-over UE sends a random access request to the S-eNB, and establishes a synchronous connection to directly communicate with the S-eNB.

506: The agent UE initiates random access to the T-eNB according to a PRACH resource, establishes an uplink synchronous connection to the T-eNB, sends a first handover complete message to the T-eNB, and sends a second handover complete message separately to each piece of to-be-handed-over UE in the UE group.

Specifically, referring to FIG. 6, in step 8, the agent UE initiates contention-free random access to the T-eNB according to the PRACH resource, and obtains a timing advance of the T-eNB and permission of sending uplink data; in step 9, the agent UE sends a first handover complete message, that is, an RRC reconfiguration complete message, to the T-eNB, to indicate that the agent UE has completed the handover; and in step 10, the agent UE sends a second handover complete message to the UE that is allowed to perform handover, to notify that the agent UE has completed the handover.

It should be noted that, after the agent UE initiates the random access to the T-eNB according to the PRACH resource, if the random access to the T-eNB that is initiated according to the PRACH resource fails, a synchronous-connection re-establishment request is initiated; and
if synchronous-connection re-establishment fails, a re-establishment notification message is sent to each piece of to-be-handed-over UE in the UE group, to instruct each piece of to-be-handed-over UE in the UE group to separately establish a synchronous connection.

507: The agent UE receives a third handover complete message sent by each piece of to-be-handed-over UE in the UE group and forwards the third handover complete message to the T-eNB.

Specifically, referring to FIG. 6, in step 11, each piece of to-be-handed-over UE that is allowed to perform handover sends a third handover complete message, that is, a reconfiguration complete message, to the agent UE, to indicate that each piece of to-be-handed-over UE has completed the handover; and in step 12, the agent UE forwards, to the T-eNB, the third handover complete message, that is, the reconfiguration complete message, of each piece of to-be-handed-over UE that is allowed to perform handover.

508: The T-eNB sends a path conversion request to an MME, and receives a path conversion confirm message that is sent by the MME after the MME converts downlink paths of the agent UE and the to-be-handed-over UE according to the path conversion request.

Specifically, referring to FIG. 6, in step 13, the T-eNB sends a path conversion request message to an MME, to request to convert a downlink path of each piece of UE that succeeds in handover; in step 14, the MME and an S-GW complete conversion of the downlink path of each piece of UE; and in step 15, the MME sends a path conversion request confirm message to the T-eNB.

509: The S-eNB receives a context release message sent by the T-eNB, and releases context resources of the agent UE and the to-be-handed-over UE in the UE group.

Specifically, referring to FIG. 6, in step 16, the T-eNB sends a UE context release message to the S-eNB; and in step 17, the S-eNB releases context resources of all UEs that succeed in handover.

In the method provided by this embodiment of the present invention, when it is determined that agent UE and at least one piece of UE in a UE group need to be handed over, a handover request message is sent to a T-eNB; and a handover configuration message including a PRACH resource and a C-RNTI that are allocated by the T-eNB to the agent UE and a C-RNTI that is allocated by the T-eNB to each piece of to-be-handed-over UE that needs to be handed over is sent to the agent UE, and when the agent UE and each piece of to-be-handed-over UE complete handover, context resources of the agent UE and each piece of to-be-handed-over UE are released, thereby resolving a problem that currently a large quantity of Preambles and signaling need to be consumed because agent UE and each piece of to-be-handed-over UE need to perform handover separately with a T-eNB during handover of a user equipment group and a problem of redundant synchronization in a single link MUCC state, saving Preamble resources and signaling, and improving handover efficiency.

### Embodiment 6

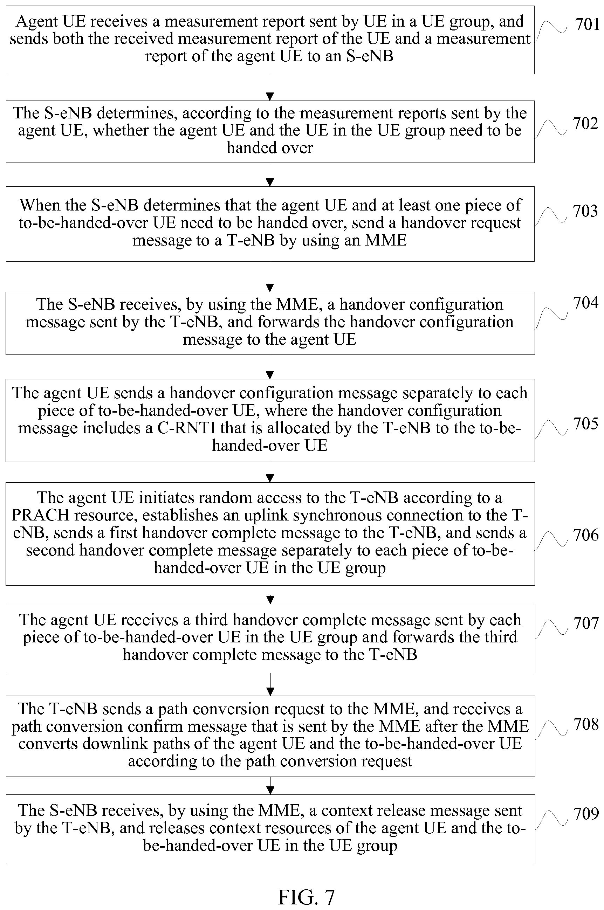

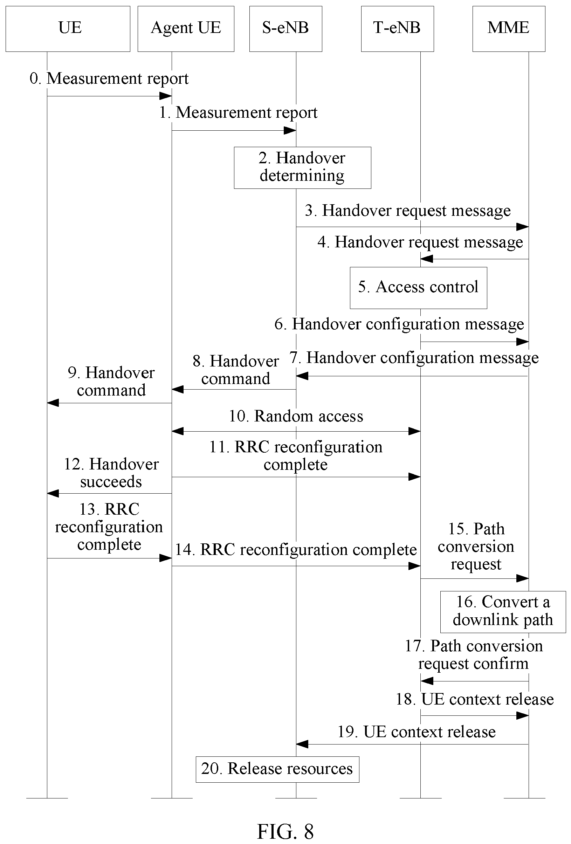

Referring to FIG. 7, an embodiment of the present invention provides a method for handover of a user equipment group, where the method includes:
701: Agent UE receives a measurement report sent by UE in a UE group, and sends both the received measurement report of the UE and a measurement report of the agent UE to an S-eNB.
702: The S-eNB determines, according to the measurement reports sent by the agent UE, whether the agent UE and the UE in the UE group need to be handed over.
   For specific processes of step 701 and step 702, refer to steps 501 and 502 of Embodiment 2, and details are not described again.
703: When the S-eNB determines that the agent UE and at least one piece of to-be-handed-over UE in the UE group need to be handed over, the S-eNB sends a handover request message to a T-eNB by using an MME.
   Specifically, the handover request message includes at least context information of the agent UE and the at least one piece of to-be-handed-over UE that needs to be handed over and a cooperative relationship between the agent UE and the to-be-handed-over UE. The S-eNB determines, according to the measurement reports sent by the agent UE, whether the agent UE and the UE in the UE group need to be handed over, and if the agent UE and the at least one piece of UE in the UE group need to be handed over, the S-eNB sends a handover request message to the T-eNB by using the MME. The other UEs that do not need to be handed over re-establish a synchronous connection. If the S-eNB determines that neither the agent UE nor the UE in the UE group needs to be handed over, the S-eNB does not send a handover request message to the T-eNB. Referring to FIG. 8, in step 3, an S-eNB sends a handover request message to an MME; and in step 4, the MME sends the handover request message to a T-eNB.
704: The S-eNB receives, by using the MME, a handover configuration message sent by the T-eNB, and forwards the handover configuration message to the agent UE.
   Specifically, the handover configuration message includes at least a PRACH resource and a C-RNTI that are allocated by the T-eNB to the agent UE and a C-RNTI that is allocated by the T-eNB to each piece of to-be-handed-over UE that needs to be handed over, where the PRACH resource includes a Preamble.
   Referring to FIG. 8, in step 5, the T-eNB performs access control, and allocates a PRACH resource to the agent UE and allocates a C-RNTI to the agent UE and each piece of to-be-handed-over UE that is allowed to perform accessing; in step 6, the T-eNB sends a handover configuration message to the MME; in step 7, the MME sends the handover configuration message to the S-eNB; in step 8, after receiving the handover configuration message, the S-eNB sends a handover command (RRC connection reconfiguration message) to the agent UE, where the handover command includes the PRACH resource and the C-RNTI that are allocated to the agent UE and the C-RNTI that is allocated to each piece of to-be-handed-over UE that needs to be handed over.
705: The agent UE sends a handover configuration message separately to each piece of to-be-handed-over UE, where the handover configuration message includes a C-RNTI that is allocated by the T-eNB to the to-be-handed-over UE.
706: The agent UE initiates random access to the T-eNB according to a PRACH resource, establishes an uplink synchronous connection to the T-eNB, sends a first handover complete message to the T-eNB, and sends a second handover complete message separately to each piece of to-be-handed-over UE in the UE group.
707: The agent UE receives a third handover complete message sent by each piece of to-be-handed-over UE in the UE group and forwards the third handover complete message to the T-eNB.
708: The T-eNB sends a path conversion request to the MME, and receives a path conversion confirm message that is sent by the MME after the MME converts downlink paths of the agent UE and the to-be-handed-over UE according to the path conversion request.
   For specific processes of step 705 to step 708, refer to steps 505 to 508 of Embodiment 2, and details are not described again.
709: The S-eNB receives, by using the MME, a context release message sent by the T-eNB, and releases context resources of the agent UE and the to-be-handed-over UE in the UE group.

Specifically, referring to FIG. 8, in step 18, the T-eNB sends a UE context release message to the MME; and in step 19, after receiving the UE context release message sent by the MME, the S-eNB releases context resources of all UEs that succeed in handover.

In the method provided by this embodiment of the present invention, when it is determined that agent UE and at least one piece of UE in a UE group need to be handed over, a handover request message is sent to a T-eNB by using an MME; and a handover configuration message including a PRACH resource and a C-RNTI that are allocated by the T-eNB to the agent UE and a C-RNTI that is allocated by the T-eNB to each piece of to-be-handed-over UE that needs to be handed over is sent to the agent UE, and when the agent UE and each piece of to-be-handed-over UE complete handover, a release request of the T-eNB is received by using the MME, and context resources of the agent UE and each piece of to-be-handed-over UE are released, thereby resolving a problem that currently a large quantity of Preambles and signaling need to be consumed because agent UE and each piece of to-be-handed-over UE need to perform handover separately with a T-eNB during handover of a user equipment group and a problem of redundant synchronization in a single link MUCC state, saving Preamble resources and signaling, and improving handover efficiency.

### Embodiment 7

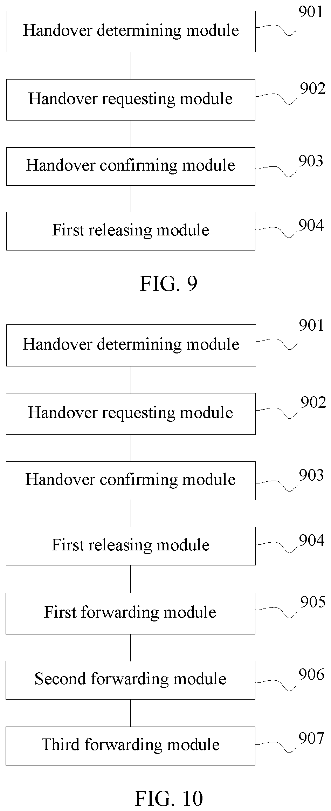

Referring to FIG. 9, an embodiment of the present invention provides a device for handover of a user equipment group, where the device includes:
a handover determining module 901, configured to determine, according to a measurement report of agent user equipment UE and a measurement report of UE in a UE group that are sent by the agent UE, whether the agent UE and each piece of UE in the UE group need to be handed over, where the UE group includes the agent UE and each piece of UE;
a handover requesting module 902, configured to: when the agent UE and at least one piece of UE in the UE group need to be handed over, send a handover request message to a target base station T-eNB, where the handover request message includes at least context information of the agent UE and the at least one piece of to-be-handed-over UE that needs to be handed over and a cooperative relationship between the agent UE and the to-be-handed-over UE;
a handover confirming module 903, configured to receive a handover configuration message sent by the T-eNB and send the handover configuration message to the agent UE, where the handover configuration message includes at least a physical random access channel PRACH resource and a cell radio network temporary identifier C-RNTI that are allocated by the T-eNB to the agent UE and a C-RNTI that is allocated by the T-eNB to each piece of to-be-handed-over UE that needs to be handed over; and
a first releasing module 904, configured to receive a context release message sent by the T-eNB, and release context resources of the agent UE and the to-be-handed-over UE.

Specifically, referring to FIG. 10, the device further includes:
a first forwarding module 905, configured to: when the agent UE and the at least one piece of UE in the UE group need to be handed over, send the handover request message to the T-eNB by using a mobility management entity MME, where the handover request message includes at least the context information of the agent UE and the at least one piece of to-be-handed-over UE that needs to be handed over and the cooperative relationship between the agent UE and the to-be-handed-over UE;
a second forwarding module 906, configured to receive, by using the MME, the handover configuration message sent by the T-eNB and send the handover configuration message to the agent UE, where the handover configuration message includes at least the PRACH resource and the C-RNTI that are allocated by the T-eNB to the agent UE and the C-RNTI that is allocated by the T-eNB to each piece of to-be-handed-over UE that needs to be handed over; and
a third forwarding module 907, configured to receive, by using the MME, the context release message sent by the T-eNB, and release the context resources of the agent UE and the to-be-handed-over UE.

In the device provided by this embodiment of the present invention, when it is determined that agent UE and at least one piece of UE in a UE group need to be handed over, a handover request message is sent to a T-eNB; a handover configuration message sent by the T-eNB is received and is sent to the agent UE, where the handover configuration message includes at least a PRACH resource and a C-RNTI that are allocated by the T-eNB to the agent UE and a C-RNTI that is allocated by the T-eNB to each piece of to-be-handed-over UE that needs to be handed over; and a context release message sent by the T-eNB is received, and context resources of the agent UE and the to-be-handed-over UE are released, thereby resolving a problem that currently a large quantity of Preambles and signaling need to be consumed because agent UE and each piece of to-be-handed-over UE need to perform handover separately with a T-eNB during handover of a user equipment group and a problem of redundant synchronization in a single link MUCC state, saving Preamble resources and signaling, and improving handover efficiency.

### Embodiment 8

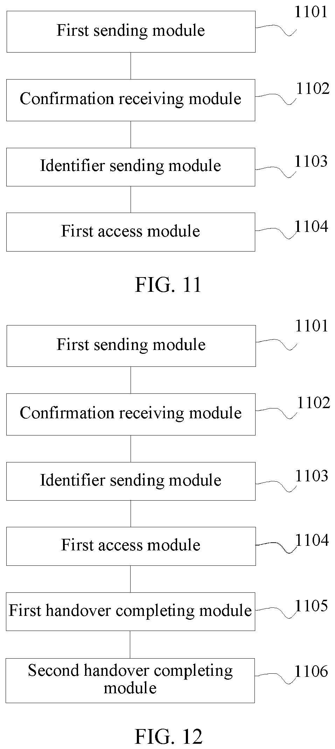

Referring to FIG. 11, an embodiment of the present invention provides a device for handover of a user equipment group, where the device includes:
a first sending module 1101, configured to send a measurement report of agent UE and a measurement report of each piece of UE in a user equipment UE group to a serving base station S-eNB, where the UE group includes the agent UE and each piece of UE;
a confirmation receiving module 1102, configured to receive a handover configuration message sent by the S-eNB, where the handover configuration message includes at least a physical random access channel PRACH resource and a cell radio network temporary identifier C-RNTI that are allocated by a T-eNB to the agent UE and a C-RNTI that is allocated by the T-eNB to each piece of to-be-handed-over UE that needs to be handed over;
an identifier sending module 1103, configured to send a handover configuration message separately to each piece of to-be-handed-over UE, where the handover configuration message includes at least the C-RNTI that is allocated by the T-eNB to the to-be-handed-over UE; and
a first access module 1104, configured to initiate random access to the T-eNB according to the PRACH resource, and establish an uplink synchronous connection to the T-eNB.

Specifically, referring to FIG. 12, the device further includes:
a first handover completing module 1105, configured to: after the uplink synchronous connection to the T-eNB is established, send a first handover complete message to the T-eNB; and send a second handover complete message separately to each piece of to-be-handed-over UE in the UE group; and
a second handover completing module 1106, configured to receive a third handover complete message sent by each piece of to-be-handed-over UE in the UE group and forward the third handover complete message to the T-eNB.

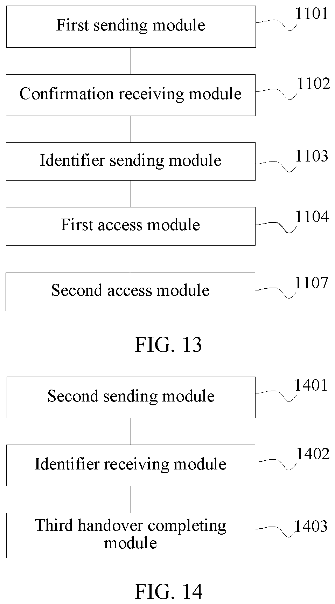

Specifically, referring to FIG. 13, the device further includes:
a second access module 1107, configured to: after the random access to the T-eNB is initiated according to the PRACH resource, if the random access to the T-eNB initiated according to the PRACH resource fails, initiate a synchronous-connection re-establishment request; and if synchronous-connection re-establishment fails, send a re-establishment notification message to each piece of to-be-handed-over UE in the UE group, to instruct each piece of to-be-handed-over UE in the UE group to separately establish a synchronous connection.

In the device provided by this embodiment of the present invention, a measurement report of agent UE and a measurement report of UE in a UE group are sent to an S-eNB; a handover configuration message sent by the S-eNB is received; a handover configuration message is sent separately to each piece of to-be-handed-over UE; and random access to a T-eNB is initiated according to a PRACH resource, and an uplink synchronous connection to the T-eNB is established, thereby resolving a problem that currently a large quantity of Preambles and signaling need to be consumed because agent UE and each piece of to-be-handed-over UE need to perform handover separately with a T-eNB during handover of a user equipment group and a problem of redundant synchronization in a single link MUCC state, saving Preamble resources and signaling, and improving handover efficiency.

### Embodiment 9

Referring to FIG. 14, an embodiment of the present invention provides a device for handover of a user equipment group, where the device includes:
a second sending module 1401, configured to send a measurement report to agent user equipment UE, so that the agent UE forwards the measurement report and a measurement report of the agent UE to a serving base station S-eNB;
an identifier receiving module 1402, configured to receive a handover configuration message sent by the agent UE, where the handover configuration message includes at least a cell radio network temporary identifier C-RNTI that is allocated by a target base station T-eNB; and
a third handover completing module 1403, configured to complete handover of to-be-handed-over UE according to the C-RNTI, and send a third handover complete message to the agent UE, so that the agent UE forwards the handover complete message to the T-eNB.

In the device provided by this embodiment of the present invention, a measurement report is sent to agent UE; a handover configuration message sent by the agent UE is received; and handover of to-be-handed-over UE is completed according to a C-RNTI, and a third handover complete message is sent to the agent UE, so that the agent UE notifies a T-eNB of the handover complete message, thereby resolving a problem that currently a large quantity of Preambles and signaling need to be consumed because agent UE and each piece of to-be-handed-over UE need to perform handover separately with a T-eNB during handover of a user equipment group and a problem of redundant synchronization in a single link MUCC state, saving Preamble resources and signaling, and improving handover efficiency.

### Embodiment 10

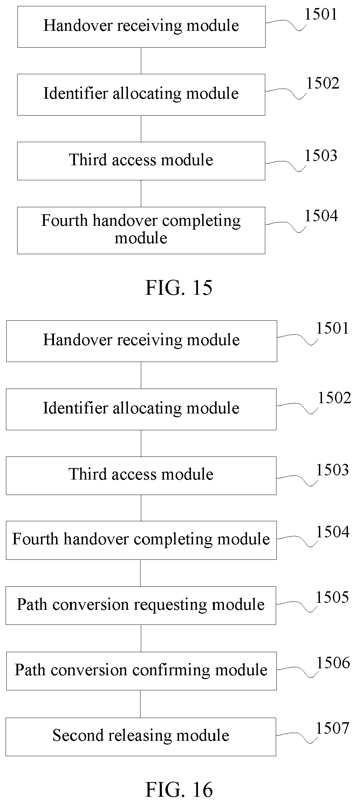

Referring to FIG. 15, an embodiment of the present invention provides a device for handover of a user equipment group, where the device includes:
a handover receiving module 1501, configured to receive a handover request message sent by a serving base station S-eNB, where the handover request message includes at least context information of agent UE and at least one piece of to-be-handed-over UE that needs to be handed over and a cooperative relationship between the agent UE and the to-be-handed-over UE;
an identifier allocating module 1502, configured to allocate resources to the agent UE and each piece of to-be-handed-over UE that is in the UE group and that needs to be handed over, where the resources include at least a physical random access channel PRACH resource and a cell radio network temporary identifier C-RNTI that are allocated to the agent UE and a C-RNTI that is allocated to each piece of to-be-handed-over UE that needs to be handed over; and send a handover configuration message to the S-eNB, where the handover configuration message includes at least the PRACH resource and the C-RNTI that are allocated to the agent UE and the C-RNTI that is allocated to each piece of to-be-handed-over UE that needs to be handed over;
a third access module 1503, configured to receive an access request that is sent by the agent UE according to the PRACH resource, and establish an uplink synchronous connection to the agent UE; and
a fourth handover completing module 1504, configured to receive a handover complete message that indicates that the to-be-handed-over UE has completed handover according to the C-RNTI and that is forwarded by the agent UE, to learn that the to-be-handed-over UE has completed the handover.

Specifically, referring to FIG. 16, the device further includes:
a path conversion requesting module 1505, configured to: after the handover complete message that indicates that the to-be-handed-over UE has completed the handover according to the C-RNTI and that is forwarded by the agent UE is received, send a path conversion request to a mobility management entity MME;
a path conversion confirming module 1506, configured to receive a path conversion confirm message that is sent by the MME after the MME converts downlink paths of the agent UE and the to-be-handed-over UE according to the path conversion request; and
a second releasing module 1507, configured to send a context release message to the MME, so that the MME sends a context release command to the S-eNB, to cause the S-eNB to release context resources of the agent UE and the to-be-handed-over UE.

In the device provided by this embodiment of the present invention, when a handover request message sent by an S-eNB is received, resources are allocated to agent UE and each piece of to-be-handed-over UE that is in a UE group and that needs to be handed over; a handover configuration message is sent to the S-eNB; an access request that is sent by the agent UE according to a PRACH resource is received, and an uplink synchronous connection to the agent UE is established; and a handover complete message that indicates that the to-be-handed-over UE has completed handover according to a C-RNTI and that is forwarded by the agent UE is received, to learn that the to-be-handed-over UE has completed the handover, thereby resolving a problem that currently a large quantity of Preambles and signaling need to be consumed because agent UE and each piece of to-be-handed-over UE need to perform handover separately with a T-eNB during handover of a user equipment group and a problem of redundant synchronization in a single link MUCC state, saving Preamble resources and signaling, and improving handover efficiency.

### Embodiment 11

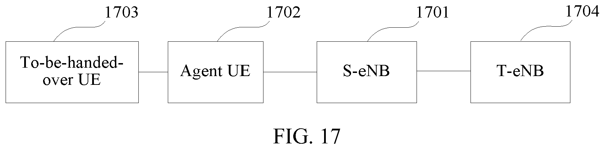

Referring to FIG. 17, an embodiment of the present invention provides a system for handover of a user equipment group, where the system includes:
a serving base station S-eNB 1701, agent user equipment UE 1702, to-be-handed-over UE 1703 in the UE group, and a target base station T-eNB 1704, where
the S-eNB 1701 is configured to implement the function according to Embodiment 7, and specific steps are not described again;
the agent UE 1702 is configured to implement the function according to Embodiment 8, and specific steps are not described again;
the to-be-handed-over UE 1703 is configured to implement the function according to Embodiment 9, and specific steps are not described again; and
the target base station T-eNB 1704 is configured to implement the function according to Embodiment 10, and specific steps are not described again.

In the system provided by this embodiment of the present invention, when it is determined that agent UE and at least one piece of UE in a UE group need to be handed over, a handover request message is sent to a T-eNB; a handover configuration message sent by the T-eNB is received and is sent to the agent UE, where the handover configuration message includes at least a PRACH resource and a C-RNTI that are allocated by the T-eNB to the agent UE and a C-RNTI that is allocated by the T-eNB to each piece of to-be-handed-over UE that needs to be handed over; and a context release message sent by the T-eNB is received, and context resources of the agent UE and the to-be-handed-over UE are released, thereby resolving a problem that currently a large quantity of Preambles and signaling need to be consumed because agent UE and each piece of to-be-handed-over UE need to perform handover separately with a T-eNB during handover of a user equipment group and a problem of redundant synchronization in a single link MUCC state, saving Preamble resources and signaling, and improving handover efficiency.

It should be noted that: when the device for handover of a user equipment group that is provided by the foregoing embodiments performs handover of a user equipment group, division of the foregoing functional modules is taken as an example for illustration. In actual application, the foregoing functions can be allocated to different functional modules and implemented according to a requirement, that is, an inner structure of a device is divided into different functional modules to implement all or some of the functions described above. In addition, the device and system for handover of a user equipment group that are provided by the foregoing embodiments pertain to a same concept as the embodiments of the method for handover of a user equipment group. For a specific implementation process of the device and system, refer to the method embodiments, and details are not described herein again.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

## Claims

1. A method for handover of a user equipment group, wherein the method is performed by a serving base station and comprises:
determining (101), according to a measurement report of an agent user equipment, UE, and a measurement report of UE in a UE group that are sent by the agent UE, whether the agent UE and each piece of UE in the UE group need to be handed over, wherein the UE group comprises the agent UE and each piece of UE;
when the agent UE and at least one piece of UE in the UE group need to be handed over, sending (102) a handover request message to a target base station, T-eNB, wherein the handover request message comprises at least context information of the agent UE and the at least one piece of to-be-handed-over UE that needs to be handed over and a cooperative relationship between the agent UE and the to-be-handed-over UE;
receiving (103) a handover configuration message sent by the T-eNB and sending the handover configuration message to the agent UE, wherein the handover configuration message comprises at least a physical random access channel, PRACH, resource and a cell radio network temporary identifier, C-RNTI, that are allocated by the T-eNB to the agent UE and a C-RNTI that is allocated by the T-eNB to each piece of to-be-handed-over UE that needs to be handed over; and
receiving (104) a context release message sent by the T-eNB, and releasing context resources of the agent UE and the to-be-handed-over UE.

2. The method according to claim 1, wherein the method further comprises:
when the agent UE and the at least one piece of UE in the UE group need to be handed over, sending the handover request message to the T-eNB by using a mobility management entity, MME, wherein the handover request message comprises at least the context information of the agent UE and the at least one piece of to-be-handed-over UE that needs to be handed over and the cooperative relationship between the agent UE and the to-be-handed-over UE;
receiving, by using the MME, the handover configuration message sent by the T-eNB and sending the handover configuration message to the agent UE, wherein the handover configuration message comprises at least the PRACH resource and the C-RNTI that are allocated by the T-eNB to the agent UE and the C-RNTI that is allocated by the T-eNB to each piece of to-be-handed-over UE that needs to be handed over; and
receiving, by using the MME, the context release message sent by the T-eNB, and releasing the context resources of the agent UE and the to-be-handed-over UE.

3. A method for handover of a user equipment group, wherein the method is performed by an agent user equipment UE and comprises:
sending (201) a measurement report of the agent UE and a measurement report of each piece of UE in a user equipment, UE, group to a serving base station, S-eNB, wherein the UE group comprises the agent UE and each piece of UE;
receiving (202) a handover configuration message sent by the S-eNB, wherein the handover configuration message comprises at least a physical random access channel, PRACH, resource and a cell radio network temporary identifier, C-RNTI, that are allocated by a T-eNB to the agent UE and a C-RNTI that is allocated by the T-eNB to each piece of to-be-handed-over UE that needs to be handed over;
sending (203) a handover configuration message separately to each piece of to-be-handed-over UE, wherein the handover configuration message comprises at least the C-RNTI that is allocated by the T-eNB to the to-be-handed-over UE; and
initiating (204) random access to the T-eNB according to the PRACH resource, and establishing an uplink synchronous connection to the T-eNB.

4. The method according to claim 3, wherein after the establishing an uplink synchronous connection to the T-eNB, the method further comprises:
sending a first handover complete message to the T-eNB;
sending a second handover complete message separately to each piece of to-be-handed-over UE in the UE group; and
receiving a third handover complete message sent by each piece of to-be-handed-over UE in the UE group and forwarding the third handover complete message to the T-eNB.

5. The method according to claim 3, wherein after the initiating random access to the T-eNB according to the PRACH resource, the method further comprises:
if the initiating random access to the T-eNB according to the PRACH resource fails, initiating a synchronous-connection re-establishment request; and
if synchronous-connection re-establishment fails, sending a re-establishment notification message to each piece of to-be-handed-over UE in the UE group, to instruct each piece of to-be-handed-over UE in the UE group to separately establish a synchronous connection.

6. A method for handover of a user equipment group, wherein the method is performed by a target base station and comprises:
receiving (401) a handover request message sent by a serving base station, S-eNB, wherein the handover request message comprises at least context information of agent user equipment, UE, and at least one piece of to-be-handed-over UE that is in a UE group and that needs to be handed over and a cooperative relationship between the agent UE and the to-be-handed-over UE;
allocating (402) resources to the agent UE and each piece of to-be-handed-over UE that is in the UE group and that needs to be handed over, wherein the resources comprise at least a physical random access channel, PRACH, resource and a cell radio network temporary identifier, C-RNTI, that are allocated to the agent UE and a C-RNTI that is allocated to each piece of to-be-handed-over UE that needs to be handed over, and sending a handover configuration message to the S-eNB, wherein the handover configuration message comprises at least the PRACH resource and the C-RNTI that are allocated to the agent UE and the C-RNTI that is allocated to each piece of to-be-handed-over UE that needs to be handed over;
receiving (403) an access request that is sent by the agent UE according to the PRACH resource, and establishing an uplink synchronous connection to the agent UE; and
receiving (404) a handover complete message that indicates that the to-be-handed-over UE has completed handover according to the C-RNTI and that is forwarded by the agent UE, to learn that the to-be-handed-over UE has completed the handover.

7. The method according to claim 6, wherein after the receiving (404) a handover complete message that indicates that the to-be-handed-over UE has completed handover according to the C-RNTI and that is forwarded by the agent UE, the method further comprises:
sending a path conversion request to a mobility management entity, MME;
receiving a path conversion confirm message that is sent by the MME after the MME converts downlink paths of the agent UE and the to-be-handed-over UE according to the path conversion request; and
sending a context release message to the MME, so that the MME sends a context release command to the S-eNB, to cause the S-eNB to release context resources of the agent UE and the to-be-handed-over UE.

8. A serving base station device for handover of a user equipment group, wherein the device comprises:
a handover determining module (901), configured to determine, according to a measurement report of an agent user equipment, UE, and a measurement report of UE in a UE group that are sent by the agent UE, whether the agent UE and each piece of UE in the UE group need to be handed over, wherein the UE group comprises the agent UE and each piece of UE;
a handover requesting module (902), configured to: when the agent UE and at least one piece of UE in the UE group need to be handed over, send a handover request message to a target base station, T-eNB, wherein the handover request message comprises at least context information of the agent UE and the at least one piece of to-be-handed-over UE that needs to be handed over and a cooperative relationship between the agent UE and the to-be-handed-over UE;
a handover confirming module (903), configured to receive a handover configuration message sent by the T-eNB and send the handover configuration message to the agent UE, wherein the handover configuration message comprises at least a physical random access channel, PRACH, resource and a cell radio network temporary identifier, C-RNTI, that are allocated by the T-eNB to the agent UE and a C-RNTI that is allocated by the T-eNB to each piece of to-be-handed-over UE that needs to be handed over; and
a first releasing module (904), configured to receive a context release message sent by the T-eNB, and release context resources of the agent UE and the to-be-handed-over UE.

9. The device according to claim 8, wherein the device further comprises:
a first forwarding module (905), configured to: when the agent UE and the at least one piece of UE in the UE group need to be handed over, send the handover request message to the T-eNB by using a mobility management entity, MME, wherein the handover request message comprises at least the context information of the agent UE and the at least one piece of to-be-handed-over UE that needs to be handed over and the cooperative relationship between the agent UE and the to-be-handed-over UE;
a second forwarding module (906), configured to receive, by using the MME, the handover configuration message sent by the T-eNB and send the handover configuration message to the agent UE, wherein the handover configuration message comprises at least the PRACH resource and the C-RNTI that are allocated by the T-eNB to the agent UE and the C-RNTI that is allocated by the T-eNB to each piece of to-be-handed-over UE that needs to be handed over; and
a third forwarding module (907), configured to receive, by using the MME, the context release message sent by the T-eNB, and release the context resources of the agent UE and the to-be-handed-over UE.

10. An agent user equipment device for handover of a user equipment group, wherein the device comprises:
a first sending module (1101), configured to send a measurement report of the agent UE and a measurement report of each piece of UE in a user equipment, UE, group to a serving base station, S-eNB, wherein the UE group comprises the agent UE and each piece of UE;
a confirmation receiving module (1102), configured to receive a handover configuration message sent by the S-eNB, wherein the handover configuration message comprises at least a physical random access channel PRACH resource and a cell radio network temporary identifier, C-RNTI, that are allocated by a T-eNB to the agent UE and a C-RNTI that is allocated by the T-eNB to each piece of to-be-handed-over UE that needs to be handed over;
an identifier sending module (1103), configured to send a handover configuration message separately to each piece of to-be-handed-over UE, wherein the handover configuration message comprises at least the C-RNTI that is allocated by the T-eNB to the to-be-handed-over UE; and
a first access module (1104), configured to initiate random access to the T-eNB according to the PRACH resource, and establish an uplink synchronous connection to the T-eNB.

11. The device according to claim 10, wherein the device further comprises:
a first handover completing module (1105), configured to: after the uplink synchronous connection to the T-eNB is established, send a first handover complete message to the T-eNB; and send a second handover complete message separately to each piece of to-be-handed-over UE in the UE group; and
a second handover completing module (1106), configured to receive a third handover complete message sent by each piece of to-be-handed-over UE in the UE group and forward the third handover complete message to the T-eNB.

12. The device according to claim 10, wherein the device further comprises:
a second access module (1107), configured to: after the random access to the T-eNB is initiated according to the PRACH resource, if the random access to the T-eNB initiated according to the PRACH resource fails, initiate a synchronous-connection re-establishment request; and if synchronous-connection re-establishment fails, send a re-establishment notification message to each piece of to-be-handed-over UE in the UE group, to instruct each piece of to-be-handed-over UE in the UE group to separately establish a synchronous connection.

13. A to-be-handed-over user equipment device for handover of a user equipment group, wherein the device comprises:
a second sending module (1401), configured to send a measurement report to an agent user equipment, UE, so that the agent UE forwards the measurement report and a measurement report of the agent UE to a serving base station, S-eNB;
an identifier receiving module (1402), configured to receive a handover configuration message sent by the agent UE, wherein the handover configuration message comprises at least a cell radio network temporary identifier, C-RNTI, that is allocated by a target base station, T-eNB; and
a third handover completing module (1403), configured to complete handover of to-be-handed-over UE according to the C-RNTI, and send a third handover complete message to the agent UE, so that the agent UE forwards the handover complete message to the T-eNB.

14. A target base station device for handover of a user equipment group, wherein the device comprises:
a handover receiving module (1501), configured to receive a handover request message sent by a serving base station, S-eNB, wherein the handover request message comprises at least context information of an agent user equipment, UE, and at least one piece of to-be-handed-over UE that needs to be handed over and a cooperative relationship between the agent UE and the to-be-handed-over UE;
an identifier allocating module (1502), configured to allocate resources to the agent UE and each piece of to-be-handed-over UE that is in the UE group and that needs to be handed over, wherein the resources comprise at least a physical random access channel, PRACH, resource and a cell radio network temporary identifier, C-RNTI, that are allocated to the agent UE and a C-RNTI that is allocated to each piece of to-be-handed-over UE that needs to be handed over; and send a handover configuration message to the S-eNB, wherein the handover configuration message comprises at least the PRACH resource and the C-RNTI that are allocated to the agent UE and the C-RNTI that is allocated to each piece of to-be-handed-over UE that needs to be handed over;
a third access module (1503), configured to receive an access request that is sent by the agent UE according to the PRACH resource, and establish an uplink synchronous connection to the agent UE; and
a fourth handover completing module (1504), configured to receive a handover complete message that indicates that the to-be-handed-over UE has completed handover according to the C-RNTI and that is forwarded by the agent UE, to learn that the to-be-handed-over UE has completed the handover.

## Patentansprüche

1. Verfahren zur Weiterreichung einer Benutzer-Equipment-Gruppe, wobei das Verfahren durch eine bedienende Basisstation durchgeführt wird und umfasst:
Feststellen (101) gemäß einem Messbericht eines Agenten-Benutzer-Equipments, UE, und einem Messberrich eines UE in einer UE-Gruppe, die durch das Agenten-UE versandt werden, ob das Agenten-UE und jedes Teil des UE in der UE-Gruppe weitergeleitet werden sollen, wobei die UE-Gruppe das Agenten-UE und jeden Teil des UE umfasst;
wenn das Agenten-UE und mindestens ein Teil eines UE in der UE-Gruppe weitergereicht werden sollen, Senden (102) einer Weiterreichungsanforderungsnachricht zu einer Ziel-Basisstation, T-eNB, wobei die Weiterreichungsanforderungsnachricht zumindest Kontextinformation des Agenten-UE und des mindestens einen Teils des weiterzureichenden UE umfasst, das weitergereicht werden soll, und eine kooperative Beziehung zwischen dem Agenten-UE und dem weiterzureichenden UE;
Empfangen (103) einer Weiterreichungskonfigurationsnachricht, gesendet vom T-eNB, und Senden der Weiterreichungskonfigurationsnachricht zum Agenten-UE,
wobei die Weiterreichungskonfigurationsnachricht mindestens eine physikalische Direktzugriffskanal-(PRACH)-Ressource und eine temporäre Zellfunknetzwerkkennung, C-RNTI, umfasst, die durch den T-eNB dem Agenten-UE und einer C-RNTI zugewiesen werden, die durch den T-eNB jedem Teil des weiterzureichenden UE zugewiesen wird, der weitergereicht werden soll; und
Empfangen (104) einer Kontext-Freigabenachricht, gesendet durch den T-eNB, und Freigabe von Kontextressourcen des Agenten-UE und des weiterzureichenden UE.

2. Verfahren nach Anspruch 1, wobei das Verfahren weiter umfasst:
wenn das Agenten-UE und der mindestens eine Teil des UE in der UE-Gruppe weitergereicht werden sollen, Senden der Weiterreichungsanforderungsnachricht zum T-eNB unter Verwendung einer Mobilitätsmanagement-Entität, MME, wobei die Weiterreichungsanforderungsnachricht mindestens die Kontextinformation des Agenten-UE und des mindestens einen Teils des weiterzureichenden UE, das weitergereicht werden soll, und die kooperative Beziehung zwischen dem Agenten-UE und dem weiterzureichenden UE umfasst;
Empfangen der vom T-eNB gesendeten Weiterreichungskonfigurationsnachricht und Senden der Weiterreichungskonfigurationsnachricht zum Agenten-UE, wobei die Weiterreichungskonfigurationsnachricht mindestens die PRACH-Ressourcen und die C-RNTI umfasst, die durch den T-eNB jedem Teil eines weiterzureichenden UE zugewiesen werden, das weitergereicht werden soll; und Empfangen der durch den T-eNB gesendeten Kontext-Freigabenachricht unter Verwendung der MME und Freigeben der Kontextressourcen des Agenten-UE und des weiterzureichenden UE.

3. Verfahren zur Weiterreichung einer Benutzer-Equipment-Gruppe, wobei das Verfahren durch ein Agenten-Benutzer-Equipment UE durchgeführt wird und umfasst:
Senden (201) eines Messberichts des Agenten-UE und eines Messberichts von jedem Teil des UE in einer Benutzer-Equipment-(UE)-Gruppe zu einer bedienenden Basisstation, S-eNB, wobei die UE-Gruppe das Agenten-UE und jeden Teil des UE umfasst;
Empfangen (202) einer durch den S-eNB gesendeten Weiterreichungskonfigurationsnachricht, wobei die Weiterreichungskonfigurationsnachricht mindestens eine physikalische Direktzugriffskanal-(PRACH)-Ressource und eine temporäre Zellfunknetzwerkkennung, C-RNTI, umfasst, die durch einen T-eNB dem Agenten-UE und einer C-RNTI zugewiesen werden, die durch den T-eNB jedem Teil des weiterzureichenden UE zugewiesen wird, der weitergereicht werden soll;
separates Senden (203) einer Weiterreichungskonfigurationsnachricht zu jedem Teil des weiterzureichenden UE, wobei die Weiterreichungskonfigurationsnachricht mindestens die C-RNTI umfasst, die durch den T-eNB dem weiterzureichenden UE zugewiesen wird; und
Initiieren (204) von Direktzugriff auf den T-eNB entsprechend der PRACH-Ressource und Aufbau einer synchronen Uplink-Verbindung zum T-eNB.

4. Verfahren nach Anspruch 3, wobei das Verfahren nach dem Aufbau einer synchronen Uplink-Verbindung zum T-eNB ferner umfasst:
Senden einer ersten Weiterreichungsabschlussnachricht zum T-eNB;
separates Senden einer zweiten Weiterreichungsabschlussnachricht zu jedem Teil des weiterzureichenden UE in der UE-Gruppe; und
Empfangen einer dritten, von jedem Teil des weiterzureichenden UE in der UE-Gruppe gesendeten Weiterreichungsabschlussnachricht und Weiterleiten der dritten Weiterreichungsabschlussnachricht zum T-eNB.

5. Verfahren nach Anspruch 3, wobei das Verfahren nach dem Initiieren von Direktzugriff auf den T-eNB entsprechend der PRACH-Ressource ferner umfasst:
falls das Initiieren von Direktzugriff auf den T-eNB entsprechend der PRACH-Ressource misslingt, Initiieren einer Neuaufbauanforderung einer synchronen Verbindung; und;
falls der Neuaufbau einer synchronen Verbindung misslingt, Senden einer Neuaufbau-Benachrichtigungsmeldung zu jedem Teil des weiterzureichenden UE in der UE-Gruppe, um jeden Teil des weiterzureichenden UE in der UE-Gruppe anzuweisen, separat eine synchrone Verbindung aufzubauen.

6. Verfahren zur Weiterreichung einer Benutzer-Equipment-Gruppe, wobei das Verfahren durch eine Ziel-Basisstation durchgeführt wird und umfasst:
Empfangen (401) einer durch eine bedienende Basisstation, S-eNB, gesendeten Weiterreichungsanforderungsnachricht, wobei die Weiterreichungsanforderungsnachricht zumindest Kontextinformation von Agenten-UE und mindestens einen Teil des weiterzureichenden UE, der in einer UE-Gruppe ist und weitergereicht werden soll, und eine kooperative Beziehung zwischen dem Agenten-UE und dem weiterzureichenden UE umfasst;
Zuweisen (402) von Ressourcen zum Agenten-UE und zu jedem Teil des weiterzureichenden UE, der in der UE-Gruppe ist und der weitergereicht werden soll, wobei die Ressourcen mindestens eine physikalische Direktzugriffskanal-(PRACH)-Ressource und eine temporäre Zellfunknetzwerkkennung, C-RNTI, umfassen, die dem Agenten-UE und einer C-RNTI zugewiesen werden, die jedem Teil des weiterzureichenden UE zugewiesen wird, der weitergereicht werden soll; und Senden einer Weiterreichungskonfigurationsnachricht zum S-eNB, wobei die Weiterreichungskonfigurationsnachricht mindestens die PRACH-Ressource und die C-RNTI-Kennung umfasst, die dem Agenten-UE und der C-RNTI zugewiesen werden, die jedem Teil des weiterzureichenden UE, das weitergereicht werden soll, zugewiesen wird;
Empfangen (403) einer Zugriffsanforderung, die durch das Agenten-UE entsprechend der PRACH-Ressource versendet wird und Aufbauen einer synchronen Uplink-Verbindung zum Agenten-UE; und
Empfangen (404) einer Weiterreichungsabschlussnachricht, die angibt, dass das weiterzureichende UE die Weiterreichung gemäß der C-RNTI abgeschlossen hat, und die durch das Agenten-UE weitergeleitet wird, um zu erfassen, dass das weiterzureichende UE die Weiterreichung abgeschlossen hat.

7. Verfahren nach Anspruch 6, wobei das Verfahren nach dem Empfangen (404) einer Weiterreichungsabschlussnachricht, die angibt, dass das weiterzureichende UE die Weiterreichung gemäß der C-RNTI abgeschlossen hat, und die durch das Agenten-UE weitergeleitet wird, ferner umfasst;
Senden einer Pfadumwandlungsanforderung zu einer Mobilitätsmanagement-Entität, MME;
Empfangen einer Pfadumwandlungsbestätigungsmeldung, die durch die MME gesendet wird, nachdem die MME Downlink-Pfade des Agenten-UE und des weiterzureichenden UE entsprechend der Pfadumwandlungsanforderung umgewandelt hat; und
Senden einer Kontext-Freigabenachricht zu der MME, sodass die MME einen Kontext-Freigabebefehl zum S-eNB sendet, um den S-eNB zu veranlassen, Kontextressourcen des Agenten-UE und des weiterzureichenden UE freizugeben.

8. Bedienende Basisstationseinrichtung zum Weiterreichen einer Benutzer-Equipment-Gruppe, wobei die Einrichtung umfasst:
ein Weiterreichungsbestimmungsmodul (901), ausgelegt zum Ermitteln, entsprechend einem Messbericht eines Agenten-Benutzer-Equipments, UE, und einem Messbericht eines UE in einer UE-Gruppe, die durch die Agenten-UE versendet werden, ob das Agenten-UE und jeder Teil des UE in der UE-Gruppe weitergereicht werden sollen, wobei die UE-Gruppe das Agenten-UE und jeden Teil des UE umfasst;
ein Weiterreichungsanforderungsmodul (902), dafür ausgelegt, wenn das Agenten-UE und mindestens ein Teil des UE in der UE-Gruppe weitergereicht werden sollen, eine Weiterreichungsanforderungsnachricht zu einer Ziel-Basisstation, T-eNB, zu senden, wobei die Weiterreichungsanforderungsnachricht mindestens Kontextinformation des Agenten-UE und des mindestens einen Teils der weiterzureichenden UE, der weitergereicht werden soll, und eine kooperative Beziehung zwischen dem Agenten-UE und dem weiterzureichenden UE umfasst.
ein Weiterreichungsbestätigungsmodul (903), ausgelegt zum Empfangen einer durch den T-eNB gesendeten Weiterreichungskonfigurationsnachricht und zum Senden der Weiterreichungskonfigurationsnachricht zum Agenten-UE, wobei die Weiterreichungskonfigurationsnachricht mindestens eine physikalische Direktzugriffskanal-(PRACH)-Ressource und eine temporäre Zellfunknetzwerkkennung, C-RNTI, umfasst, die durch den T-eNB dem Agenten-UE und einer C-RNTI zugewiesen werden, die durch den T-eNB jedem Teil eines weiterzureichenden UE zugewiesen wird, der weitergereicht werden soll; und
ein erstes Freigabemodul (904), ausgelegt zum Empfangen einer durch den T-eNB gesendeten Kontext-Freigabenachricht, und Freigabe von Kontextressourcen des Agenten-UE und des weiterzureichenden UE.

9. Einrichtung nach Anspruch 8, wobei die Einrichtung ferner umfasst:
ein erstes Weiterleitungsmodul (905), dafür ausgelegt, wenn das Agenten-UE und der mindestens eine Teil eines UE in der UE-Gruppe weitergereicht werden sollen, die Weiterreichungsanforderungsnachricht unter Verwendung einer Mobilitätsmanagement-Entität, MME, zum T-eNB zu senden, wobei die Weiterreichungsanforderungsnachricht mindestens die Kontextinformation des Agenten-UE und des mindestens einen Teils einer weiterzureichenden UE, der weitergereicht werden soll, und die kooperative Beziehung zwischen dem Agenten-UE und dem weiterzureichenden UE umfasst;
ein zweites Weiterleitungsmodul (906), ausgelegt zum Empfangen der durch den T-eNB gesendeten Weiterreichungskonfigurationsmeldung und zum Senden der Weiterreichungskonfigurationsnachricht zum Agenten-UE, wobei die Weiterreichungskonfigurationsnachricht mindestens die PRACH-Ressource und die C-RNTI umfasst, die durch den T-eNB dem Agenten-UE und der C-RNTI zugewiesen werden, die durch den T-eNB jedem Teil des weiterzureichenden UE zugewiesen wird, der weitergereicht werden soll; und
ein drittes Weiterleitungsmodul (907), ausgelegt zum Empfangen der durch den T-eNB gesendeten Kontext-Freigabenachricht unter Verwendung der MME und zum Freigeben der Kontextressourcen des Agenten-UE und des weiterzureichenden UE.

10. Agenten-Benutzer-Equipment-Einrichtung zur Weiterreichung einer Benutzer-Equipment-Gruppe, wobei die Einrichtung umfasst:
ein erstes Sendemodul (1101), ausgelegt zum Senden eines Messberichts des Agenten-UE und eines Messberichts von jedem Teil eines UE in einer Benutzer-Equipment-(UE)-Gruppe zu einer bedienenden Basisstation, S-eNB, wobei die UE-Gruppe das Agenten-UE und jedes Teil eines UE umfasst;
ein Bestätigungsempfangsmodul (1102), ausgelegt zum Empfangen einer durch den S-eNB gesendeten Weiterreichungskonfigurationsnachricht, wobei die Weiterreichungskonfigurationsnachricht mindestens eine physikalische Direktzugriffskanal-(PRACH)-Ressource und eine temporäre Zellfunknetzwerkkennung, C-RNTI, umfasst, die durch einen T-eNB dem Agenten-UE und einer C-RNTI zugewiesen werden, die durch den T-eNB jedem Teil des weiterzureichenden UE, der weitergereicht werden soll, zugewiesen wird;
ein Kennungssendemodul (1103), ausgelegt zum separaten Senden einer Weiterreichungskonfigurationsnachricht zu jedem Teil eines weiterzureichenden UE, wobei die Weiterreichungskonfigurationsnachricht mindestens die C-RNTI umfasst, die durch den T-eNB jedem Teil eines weiterzureichenden UE zugewiesen wird, der weitergereicht werden soll; und
ein erstes Zugriffsmodul (1104), ausgelegt zum Initiieren von Direktzugriff zum T-eNB entsprechend der PRACH-Ressource und zum Aufbauen einer synchronen Uplink-Verbindung zum T-eNB.

11. Einrichtung nach Anspruch 10, wobei die Einrichtung ferner umfasst:
ein erstes Weiterreichungsabschlussmodul (1105), dafür ausgelegt, nach dem Aufbau der synchronen Uplink-Verbindung zum T-eNB eine erste Weiterreichungsabschlussnachricht zum T-eNB zu senden und eine zweite Weiterreichungsabschlussnachricht separat zu jedem Teil eines weiterzureichenden UE in der UE-Gruppe zu senden; und
ein zweites Weiterreichungsabschlussmodul (1106), ausgelegt zum Empfangen einer dritten, durch jeden Teil eines weiterzureichenden UE in der UE-Gruppe gesendeten Weiterreichungsabschlussnachricht und zum Weiterleiten der dritten Weiterreichungsabschlussnachricht zum T-eNB.

12. Einrichtung nach Anspruch 10, wobei die Einrichtung ferner umfasst:
ein zweites Zugriffsmodul (1107), dafür ausgelegt, nach dem Initiieren des Direktzugriffs auf den T-eNB entsprechend der PRACH-Ressource, falls der Direktzugriff auf den T-eNB entsprechend der PRACH-Ressource misslingt, eine Neuaufbauanforderung einer synchronen Verbindung zu initiieren; und, falls der Neuaufbau einer synchronen Verbindung misslingt, eine Neuaufbau-Benachrichtigungsmeldung zu jedem Teil des weiterzureichenden UE in der UE-Gruppe zu senden, um jeden Teil des weiterzureichenden UE in der UE-Gruppe anzuweisen, separat eine synchrone Verbindung aufzubauen.

13. Weiterzureichende Benutzer-Equipment-Einrichtung zur Weiterreichung einer Benutzer-Equipment-Gruppe, wobei die Einrichtung umfasst:
ein zweites Sendemodul (1401), ausgelegt zum Senden eines Messberichts zu einem Agenten-Benutzer-Equipment, UE, sodass das Agenten-UE den Messbericht und einen Messbericht des Agenten-UE zu einer bedienenden Basisstation, S-eNB, sendet;
ein Kennungsempfangsmodul (1402), ausgelegt zum Empfangen einer durch das Agenten-UE gesendeten Weiterreichungskonfigurationsnachricht, wobei die Weiterreichungskonfigurationsnachricht mindestens eine temporäre Zellfunknetzwerkkennung, C-RNTI, umfasst, die durch eine Ziel-Basisstation, T-eNB, zugewiesen wird; und
ein drittes Weiterreichungsabschlussmodul (1403), ausgelegt zum Abschließen der Weiterreichung eines weiterzureichenden UE entsprechend der C-RNTI und zum Senden einer dritten Weiterreichungsabschlussnachricht zum Agenten-UE, sodass das Agenten-UE die Weiterreichungsabschlussnachricht zum T-eNB weiterleitet.

14. Ziel-Basisstationseinrichtung zur Weiterreichung einer Benutzer-Equipment-Gruppe, wobei die Einrichtung umfasst:
ein Weiterreichungsempfangsmodul (1501), ausgelegt zum Empfangen einer durch eine bedienende Basisstation, S-eNB, gesendeten Weiterreichungsanforderungsnachricht, wobei die Weiterreichungsanforderungsnachricht mindestens Kontextinformation eines Agenten-Benutzer-Equipments, UE, und mindestens einen Teil eines weiterzureichenden UE, der weitergereicht werden soll, und eine kooperative Beziehung zwischen dem Agenten-UE und dem weiterzureichenden UE umfasst;
ein Kennungszuweisungsmodul (1502), ausgelegt zum Zuweisen von Ressourcen zum Agenten-UE und zu jedem Teil eines weiterzureichenden UE, der in der UE-Gruppe ist und der weitergereicht werden soll, wobei die Ressourcen mindestens eine physikalische Direktzugriffskanal-(PRACH)-Ressource und eine temporäre Zellfunknetzwerkkennung, C-RNTI, umfassen, die dem Agenten-UE und einer C-RNTI zugewiesen werden, die jedem Teil des weiterzureichenden UE zugewiesen wird, der weitergereicht werden soll; und Senden einer Weiterreichungskonfigurationsnachricht zum S-eNB, wobei die Weiterreichungskonfigurationsnachricht mindestens die PRACH-Ressource und die C-RNTI-Kennung umfasst, die dem Agenten-UE und der C-RNTI zugewiesen werden, die jedem Teil des weiterzureichenden UE, das weitergereicht werden soll, zugewiesen wird;
ein drittes Zugriffsmodul (1503), ausgelegt zum Empfangen einer Weiterreichungsabschlussnachricht, die angibt, dass das weiterzureichende UE die Weiterreichung entsprechend der C-RNTI abgeschlossen hat, und die zum Agenten-UE weitergeleitet wird, um zu erfassen, dass das weiterzureichende UE die Weiterreichung abgeschlossen hat.

## Revendications

1. Procédé de transfert intercellulaire d'un groupe d'équipements utilisateurs, le procédé est mis en oeuvre par une station de base de desserte et comprend de :
déterminer (101), en fonction d'un rapport de mesure d'un équipement utilisateur, UE, agent et d'un rapport de mesure d'UE dans un groupe d'UE qui sont envoyés par l'UE agent, si l'UE agent et chaque élément d'UE dans le groupe d'UE doit être transféré, dans lequel le groupe d'UE comprend l'UE agent et chaque élément d'UE ;
lorsque l'UE agent et au moins un élément d'UE du groupe d'UE doivent être transférés, envoyer (102) un message de demande de transfert intercellulaire à une station de base cible, T-eNB, dans lequel le message de demande de transfert intercellulaire comprend au moins des informations de contexte de l'UE agent et dudit au moins un élément d'UE à transférer qui doit être transféré et une relation de coopération entre l'UE agent et l'UE à transférer ;
recevoir (103) un message de configuration de transfert intercellulaire envoyé par le T-eNB et envoyer le message de configuration de transfert intercellulaire à l'UE agent, dans lequel le message de configuration de transfert intercellulaire comprend au moins une ressource de canal d'accès physique aléatoire, PRACH, et un identificateur temporaire de réseau radio cellulaire, C-RNTI, qui sont attribués par le T-eNB à l'UE agent et un C-RNTI qui est attribué par le T-eNB à chaque élément d'UE à transférer qui doit être transféré ; et
recevoir (104) un message de libération de contexte envoyé par le T-eNB, et libérer des ressources de contexte de l'UE agent et de l'UE à transférer.

2. Procédé selon la revendication 1, dans lequel le procédé comprend en outre de :
lorsque l'UE agent et le au moins un élément d'UE du groupe d'UE doivent être transférés, envoyer le message de demande de transfert intercellulaire au T-eNB en utilisant une entité de gestion de mobilité, MME, dans lequel le message de demande de transfert intercellulaire comprend au moins les informations de contexte de l'UE agent et de l'au moins un élément d'UE à transférer qui doit être transféré, ainsi que la relation de coopération entre l'UE agent et l'UE à transférer ;
recevoir, en utilisant la MME, le message de configuration de transfert intercellulaire envoyé par le T-eNB et envoyer le message de configuration de transfert intercellulaire à l'UE agent, dans lequel le message de configuration de transfert intercellulaire comprend au moins la ressource PRACH et le C-RNTI qui sont attribués par le T-eNB à l'UE agent et le C-RNTI qui est attribué par le T-eNB à chaque UE à transférer qui doit être transféré ; et
recevoir, en utilisant la MME, le message de libération de contexte envoyé par le T-eNB, et libérer les ressources de contexte de l'UE agent et de l'UE à transférer.

3. Procédé de transfert intercellulaire d'un groupe d'équipements utilisateurs, **caractérisé en ce que** procédé est exécuté par un équipement utilisateur, UE, agent et comprend de :
envoyer (201) un rapport de mesure de l'UE agent et un rapport de mesure de chaque élément d'UE d'un groupe d'équipements utilisateurs, UE, à une station de base de desserte, S-eNB, dans lequel le groupe d'UE comprend l'UE agent et chaque élément d'UE;
recevoir (202) un message de configuration de transfert intercellulaire envoyé par le S-eNB, dans lequel le message de configuration de transfert intercellulaire comprend au moins une ressource de canal d'accès physique aléatoire, PRACH, et un identificateur temporaire de réseau radio cellulaire, C-RNTI, qui sont attribués par un T-eNB à l'UE agent et un C-RNTI qui est attribué par le T-eNB à chaque élément d'UE à transférer qui doit être transféré ;
envoyer (203) un message de configuration de transfert intercellulaire séparément à chaque élément d'UE à transférer, dans lequel le message de configuration de transfert intercellulaire comprend au moins le C-RNTI qui est attribué par le T-eNB à l'UE à transférer ; et
initier (204) un accès aléatoire au T-eNB en fonction de la ressource PRACH, et établir une connexion synchrone de liaison montante avec le T-eNB.

4. Procédé selon la revendication 3, dans lequel, après l'établissement d'une connexion synchrone de liaison montante avec le T-eNB, le procédé comprend en outre de :
envoyer un premier message de transfert intercellulaire terminé au T-eNB ;
envoyer un second message de transfert intercellulaire terminé séparément à chaque élément d'UE à transférer dans le groupe d'UE ; et
recevoir un troisième message de transfert intercellulaire terminé envoyé par chaque élément d'UE à transférer dans le groupe UE et transmettre le troisième message de transfert intercellulaire terminé au T-eNB.

5. Procédé selon la revendication 3, dans lequel, après avoir initié l'accès aléatoire au T-eNB en fonction de la ressource PRACH, le procédé comprend en outre de :
si l'initiation de l'accès aléatoire au T-eNB en fonction de la ressource PRACH échoue, initier une demande de rétablissement de connexion synchrone ; et
si le rétablissement de connexion synchrone échoue, envoyer un message de notification de rétablissement à chaque élément d'UE à transférer dans le groupe d'UE, pour ordonner à chaque élément d'UE à transférer dans le groupe UE d'établir séparément une connexion synchrone.

6. Procédé de transfert intercellulaire d'un groupe d'équipements utilisateurs, dans lequel le procédé est mis en oeuvre par une station de base cible et comprend de :
recevoir (401) un message de demande de transfert intercellulaire envoyé par une station de base de desserte, S-eNB, dans lequel le message de demande de transfert intercellulaire comprend au moins des informations de contexte d'équipement utilisateur, UE, agent et d'au moins un élément d'UE à transférer qui est dans un groupe d'UE qui doit être transféré et une relation de coopération entre l'UE agent et l'UE à transférer ;
attribuer (402) des ressources à l'UE agent et à chaque élément d'UE à transférer qui est dans le groupe d'UE et qui doit être transféré, dans lequel les ressources comprennent au moins une ressource de canal d'accès physique aléatoire, PRACH, et un identificateur temporaire de réseau radio cellulaire, C-RNTI, qui sont attribués à l'UE agent et un C-RNTI qui est attribué à chaque élément d'UE à transférer qui doit être transféré, et envoyer un message de configuration de transfert intercellulaire au S-eNB, dans lequel le message de configuration du transfert intercellulaire comprend au moins la ressource PRACH et le C-RNTI qui sont attribués à l'UE agent et le C-RNTI qui est attribué à chaque élément d'UE à transférer qui doit être transféré ;
recevoir (403) une demande d'accès qui est envoyée par l'UE agent en fonction de la ressource PRACH, et établir une connexion synchrone de liaison montante avec l'UE agent ; et
recevoir (404) un message de transfert terminé qui indique que l'UE à transférer a terminé le transfert intercellulaire selon le C-RNTI et qui est transmis par l'UE agent, pour apprendre que l'UE à transférer a terminé le transfert intercellulaire.

7. Procédé selon la revendication 6, dans lequel, après la réception (404) d'un message de transfert terminé indiquant que l'UE à transférer a terminé le transfert intercellulaire conformément au C-RNTI et qui est transmis par l'UE agent, le procédé comprend en outre de :
envoyer une demande de conversion de chemin à une entité de gestion de mobilité, MME;
recevoir un message de confirmation de conversion de chemin qui est envoyé par la MME après que la MME a converti des chemins de liaison descendante de l'UE agent et de l'UE à transférer conformément à la demande de conversion de chemin ; et
envoyer un message de libération de contexte à la MME, de sorte que la MME envoie une commande de libération de contexte au S-eNB afin que le S-eNB libère des ressources de contexte de l'UE agent et de l'UE à transférer.

8. Dispositif de station de base de desserte pour le transfert intercellulaire d'un groupe d'équipements utilisateurs, dans lequel le dispositif comprend :
un module de détermination de transfert intercellulaire (901), configuré pour déterminer, en fonction d'un rapport de mesure d'un équipement utilisateur, UE, agent et d'un rapport de mesure d'UE dans un groupe d'UE qui sont envoyés par l'UE agent, si l'UE agent et chaque élément d'UE dans le groupe d'UE doit être transféré, dans lequel le groupe d'UE comprend l'UE agent et chaque élément d'UE ;
un module de demande de transfert (902), configuré pour : lorsque l'UE agent et au moins un élément d'UE du groupe d'UE doivent être transférés, envoyer un message de demande de transfert intercellulaire à une station de base cible, T-eNB, dans lequel le message de demande de transfert intercellulaire comprend au moins des informations de contexte de l'UE agent et dudit au moins un élément d'UE à transférer qui doit être transféré et une relation de coopération entre l'UE agent et l'UE à transférer ;
un module de confirmation de transfert intercellulaire (903), configuré pour recevoir un message de configuration de transfert intercellulaire envoyé par le T-eNB et envoyer le message de configuration de transfert intercellulaire à l'UE agent, dans lequel le message de configuration de transfert intercellulaire comprend au moins une ressource de canal d'accès physique aléatoire, PRACH, et un identificateur temporaire de réseau radio cellulaire, C-RNTI, qui sont attribués par le T-eNB à l'UE agent et un C-RNTI qui est attribué par le T-eNB à chaque élément d'UE à transférer qui doit être transféré ; et
un premier module de libération (904), configuré pour recevoir un message de libération de contexte envoyé par le T-eNB, et libérer des ressources de contexte de l'UE agent et de l'UE à transférer.

9. Dispositif selon la revendication 8, dans lequel le dispositif comprend en outre :
un premier module de transmission (905), configuré pour : lorsque l'UE agent et le au moins un élément d'UE du groupe d'UE doivent être transférés, envoyer le message de demande de transfert intercellulaire au T-eNB en utilisant une entité de gestion de mobilité, MME, dans lequel le message de demande de transfert intercellulaire comprend au moins les informations de contexte de l'UE agent et de l'au moins un élément d'UE à transférer qui doit être transféré, ainsi que la relation de coopération entre l'UE agent et l'UE à transférer ;
un second module de transfert intercellulaire (906), configuré pour recevoir, en utilisant la MME, le message de configuration de transfert intercellulaire envoyé par le T-eNB et envoyer le message de configuration de transfert intercellulaire à l'UE agent, dans lequel le message de configuration de transfert intercellulaire comprend au moins la ressource PRACH et le C-RNTI qui sont attribués par le T-eNB à l'UE agent et le C-RNTI qui est attribué par le T-eNB à chaque UE à transférer qui doit être transféré ; et
un troisième module de transmission (907), configuré pour recevoir, en utilisant la MME, le message de libération de contexte envoyé par le T-eNB, et libérer les ressources de contexte de l'UE agent et de l'UE à transférer.

10. Dispositif d'équipement utilisateur agent pour le transfert intercellulaire d'un groupe d'équipements utilisateurs, dans lequel le dispositif comprend :
un premier module d'envoi (1101), configuré pour envoyer un rapport de mesure de l'UE agent et un rapport de mesure de chaque élément d'UE d'un groupe d'équipements utilisateurs, UE, à une station de base de desserte, S-eNB, dans lequel le groupe d'UE comprend l'UE agent et chaque élément d'UE ;
un module de réception de confirmation (1102), configuré pour recevoir un message de configuration de transfert intercellulaire envoyé par le S-eNB, dans lequel le message de configuration de transfert intercellulaire comprend au moins une ressource de canal d'accès physique aléatoire, PRACH, et un identificateur temporaire de réseau radio cellulaire, C-RNTI, qui sont attribués par un T-eNB à l'UE agent et un C-RNTI qui est attribué par le T-eNB à chaque élément d'UE à transférer qui doit être transféré ;
un module d'envoi d'identificateur (1103), configuré pour envoyer un message de configuration de transfert intercellulaire séparément à chaque élément d'UE à transférer, dans lequel le message de configuration de transfert intercellulaire comprend au moins le C-RNTI qui est attribué par le T-eNB à l'UE à transférer ; et un premier module d'accès (1104), configuré pour initier un accès aléatoire au T-eNB en fonction de la ressource PRACH, et établir une connexion synchrone de liaison montante avec le T-eNB.

11. Dispositif selon la revendication 10, dans lequel le dispositif comprend en outre :
un premier module d'achèvement de transfert (1105), configuré pour : après que la connexion synchrone de liaison montante avec le T-eNB est établie, envoyer un premier message de transfert intercellulaire terminé au T-eNB ; et envoyer un second message de transfert intercellulaire terminé séparément à chaque élément d'UE à transférer dans le groupe UE ; et
un second module d'achèvement de transfert (1106), configuré pour recevoir un troisième message de transfert intercellulaire terminé envoyé par chaque élément d'UE à transférer dans le groupe d'UE et transmettre le troisième message de transfert intercellulaire terminé au T-eNB.

12. Dispositif selon la revendication 10, dans lequel le dispositif comprend en outre :
un second module d'accès (1107), configuré pour : après que l'accès aléatoire au T-eNB a été initié en fonction de la ressource PRACH, si l'accès aléatoire au T-eNB initié en fonction de la ressource PRACH échoue, initier une demande de rétablissement de connexion synchrone ; et si le rétablissement de connexion synchrone échoue, envoyer un message de notification de rétablissement à chaque élément d'UE à transférer dans le groupe d'UE, pour ordonner à chaque élément d'UE à transférer dans le groupe d'UE d'établir une connexion synchrone séparément.

13. Dispositif d'équipement utilisateur à transférer pour le transfert intercellulaire d'un groupe d'équipements utilisateurs, dans lequel dans lequel le dispositif comprend :
un second module d'envoi (1401), configuré pour envoyer un rapport de mesure à un équipement utilisateur, UE, agent de sorte que l'UE agent transmette le rapport de mesure et un rapport de mesure de l'UE agent à une station de base de desserte, S-eNB ;
un module de réception d'identificateur (1402), configuré pour recevoir un message de configuration de transfert intercellulaire envoyé par l'UE agent, dans lequel le message de configuration de transfert intercellulaire comprend au moins un identificateur temporaire de réseau radio cellulaire, C-RNTI, qui est attribué par une station de base cible, T-eNB ; et
un troisième module d'achèvement de transfert intercellulaire (1403), configuré pour terminer le transfert intercellulaire de l'UE à transférer conformément au C-RNTI, et envoyer un troisième message de transfert intercellulaire terminé à l'UE agent afin que l'UE agent transmette le message de transfert intercellulaire terminé au T-eNB.

14. Dispositif de station de base cible pour le transfert intercellulaire d'un groupe d'équipements utilisateurs, dans lequel le dispositif comprend :
un module de réception de transfert intercellulaire (1501), configuré pour recevoir un message de demande de transfert intercellulaire envoyé par une station de base de desserte, S-eNB, dans lequel le message de demande de transfert intercellulaire comprend au moins des informations de contexte d'un équipement utilisateur, UE, agent et d'au moins un élément d'UE à transférer qui doit être transféré et une relation de coopération entre l'UE agent et l'UE à transférer ;
un module d'attribution d'identificateur (1502), configuré pour attribuer des ressources à l'UE agent et à chaque élément d'UE à transférer qui est dans le groupe d'UE et qui doit être transféré, dans lequel les ressources comprennent au moins une ressource de canal d'accès physique aléatoire, PRACH, et un identificateur temporaire de réseau radio cellulaire, C-RNTI, qui sont attribués à l'UE agent et un C-RNTI qui est attribué à chaque élément d'UE à transférer qui doit être transféré, et envoyer un message de configuration de transfert intercellulaire au S-eNB, dans lequel le message de configuration du transfert intercellulaire comprend au moins la ressource PRACH et le C-RNTI qui sont attribués à l'UE agent et le C-RNTI qui est attribué à chaque élément d'UE à transférer qui doit être transféré ;
un troisième module d'accès (1503), configuré pour recevoir une demande d'accès qui est envoyée par l'UE agent en fonction de la ressource PRACH, et établir une connexion synchrone de liaison montante avec l'UE agent ; et
un quatrième module d'achèvement de transfert intercellulaire (1504), configuré pour recevoir un message de transfert intercellulaire terminé qui indique que l'UE à transférer a terminé le transfert intercellulaire selon le C-RNTI et qui est transmis par l'UE agent, pour apprendre que l'UE à transférer a terminé le transfert intercellulaire.
